# EUROPEAN PATENT APPLICATION

(11) **EP 4 722 668 A1**
(43) Date of publication of application: **08.04.2026**
(21) Application number: 24819112.4
(22) Date of filing: 15.05.2024
(51) Int. Cl.: G01H 17/00, G01M 99/00

(54) **DIAGNOSTIC SENSOR, AND STATE DETERMINING SYSTEM EMPLOYING SAME**

(30) Priority: 05.06.2023 JP 2023092601
(71) Applicant: DENSO CORPORATION, Kariya-city, Aichi 448-8661 (JP)
(72) Inventor: MAWATARI, Kazuaki, Kariya-city, Aichi 4488661 (JP); MATSUI, Hiroshige, Kariya-city, Aichi 4488661 (JP); MIZUNO, Fumiaki, Kariya-city, Aichi 4488661 (JP)
(74) Representative: Kuhnen & Wacker Patent- und Rechtsanwaltsbüro PartG mbB
(86) International application number: PCT/JP2024/017986
(87) International publication number: WO 2024/252875

(57) **Abstract**

A diagnostic sensor includes a vibration sensor (10) configured to output a vibration detection signal in response to vibration within a first detection frequency range, and a sound sensor (20) configured to output a sound detection signal in response to sound in a space within a second detection frequency range, and a housing (50) defining a housing space (50a) in which the vibration sensor and the sound sensor are housed. The second detection frequency range including frequency higher than the first detection frequency range. The housing has a facing surface (51) that faces the mounting member when the diagnostic sensor is mounted on a mounting member, and the facing surface defines a through hole (510) through which the sound is guided into the housing.

## Description

### CROSS REFERENCE TO RELATED APPLICATION

The present application is based on Japanese Patent Application No. 2023-092601 filed on June 5, 2023, the contents of which are incorporated herein by reference.

### TECHNICAL FIELD

The present disclosure relates to a diagnostic sensor and a state determining system using the diagnostic sensor.

### BACKGROUND ART

Conventionally, a diagnostic sensor configured to output detection signals according to a state of a detection target has been proposed. For example, Patent Document 1 discloses a diagnostic sensor including a vibration sensor and an acoustic emission (hereinafter simply referred to as "AE") sensor. Specifically, in this diagnostic sensor, the vibration sensor outputs a detection signal according to the state on the low-frequency side, and the AE sensor outputs a detection signal according to the state on the high-frequency side. The AE sensor outputs a detection signal corresponding to elastic waves generated when elastic energy is released. When determining the state of the detection target using such a diagnostic sensor, the state determination is performed based on the detection signals from both the vibration sensor and the AE sensor.

### PRIOR ART LITERATURE

### PATENT LITERATURE

Patent Document 1: JP 2000-193519 A

### SUMMARY OF INVENTION

However, when attaching the diagnostic sensor to a mounting member, the surface of the mounting member may be rough. The AE sensor, which detects the state on the high-frequency side, detects elastic waves propagating through a solid portion of the mounting member. Thus, factors such as the surface roughness of the mounting member are likely to have an influence on the detection by the AE sensor. As a result, when the surface of the mounting member is rough, the detection accuracy of the AE sensor may decrease. Thus, when using an AE sensor, it is preferable to reduce the surface roughness of the mounting member to prevent a decrease in detection accuracy. In other words, attempting to detect the state on the high-frequency side with an AE sensor may result in significant placement constraints.

The present disclosure aims to provide a diagnostic sensor and a state determining system using the diagnostic sensor, which can reduce placement constraints.

According to one aspect of the present disclosure, a diagnostic sensor to be mounted on a mounting member includes a vibration sensor, a sound sensor, and a housing. The vibration sensor is configured to output a vibration detection signal in response to vibration within a first detection frequency range. The sound sensor is configured to output a sound detection signal in response to sound in a space within a second detection frequency range. The second detection frequency range includes frequency higher than the first detection frequency range. The housing defines a housing space in which the vibration sensor and the sound sensor are housed, and has a facing surface that faces the mounting member when the diagnostic sensor is mounted on the mounting member. The facing surface defines a through hole through which the sound is guided into the housing.

Accordingly, the diagnostic sensor includes both a vibration sensor and a sound sensor, and the state on the high-frequency side is detected by the sound sensor. The sound sensor outputs a sound detection signal according to sound propagating through a space. Since the sound sensor outputs sound detecting signals according to sound propagating through the space, the influence of the surface of the mounting member is reduced and placement constraints are reduced compared to a case where an AE sensor detects the state on the high frequency side. In other words, according to this diagnostic sensor, it is possible to suppress a decrease in detection accuracy of the state on the high-frequency side while reducing placement constraints.

Further, according to another aspect of the present disclosure, a state determining system includes the above described diagnostic sensor, a control unit configured to perform a predetermined process. The diagnostic sensor is disposed on the mounting member having a determination target. The control unit is configured to perform a state determination process of determining a state of the determination target based on a vibration determination signal from the vibration detection signal and a sound determination signal from the sound detection signal.

Accordingly, since a decrease in detection accuracy of the state on the high-frequency side is suppressed, the accuracy of state determination can be improved.

It should be noted that the reference numerals in parentheses attached to each component or the like indicate merely one example of the correspondence between such components and specific components described in the embodiments discussed later.

### BRIEF DESCRIPTION OF DRAWINGS

FIG. 1 is a schematic diagram of a state determining system according to a first embodiment.
FIG. 2 is a cross-sectional view showing the configuration of a sound detection element.
FIG. 3 is a plan view showing the configuration of the sound detection element.
FIG. 4 is a cross-sectional view showing the configuration of a sound sensor.
FIG. 5 is a plan view of an outer first surface of a housing.
FIG. 6 is a plan view of the outer first surface of the housing.
FIG. 7 is a cross-sectional view showing a state in which a diagnostic sensor is attached to a mounting member.
FIG. 8 is a schematic diagram of a machine tool including the mounting member.
FIG. 9 is a flowchart of an abnormality determination process as a state determination executed by a control unit.
FIG. 10 is a flowchart of a self-diagnosis determination process executed by the control unit.
FIG. 11 is a flowchart of a filter setting process executed by the control unit.
FIG. 12 is a schematic diagram of a state determining system in a second embodiment.
FIG. 13 is a plan view of a wiring board.
FIG. 14 is a schematic diagram of a state determining system in a third embodiment.
FIG. 15 is a cross-sectional view of the vicinity of a sound sensor in a fourth embodiment.
FIG. 16 is a cross-sectional view of the vicinity of a vibration sensor in a fifth embodiment.
FIG. 17 is a cross-sectional view of the vicinity of a vibration sensor in a modified example of the fifth embodiment.
FIG. 18 is a schematic diagram of a state determining system in a sixth embodiment.

### DESCRIPTION OF EMBODIMENTS

The embodiments of the present disclosure will be described below with reference to the drawings. It should be noted that, in the following embodiments, identical or equivalent parts are denoted by the same reference numerals and will be described accordingly.

### (First Embodiment)

A state determining system of a first embodiment will be described with reference to the drawings. The state determining system of the present embodiment is used to detect the state of a target. The state determining system may be applicable to determining wear states of cutting or grinding tools, as well as to determining states such as cracks, chipping, or galling in press machines or molding machines. In addition, the state determining system of the present embodiment may be used to determine the state of damage, wear, or lubrication in bearings, as well as for assessing states such as air leakage or abnormal noise in fans or piping. Furthermore, the state determining system of the present embodiment may be used to determine the optimal machining states when processing a workpiece. It should be noted that determining the optimal machining states when processing a workpiece refers to determining the optimal machining states based on the state of the workpiece as a target. In the following, an example will be described in which the state determining system is applied to a machine tool equipped with a cutting tool, and the state determining system assesses the state of the cutting tool. However, as described above, the state determining system of the present embodiment can be used to assess the state of various targets.

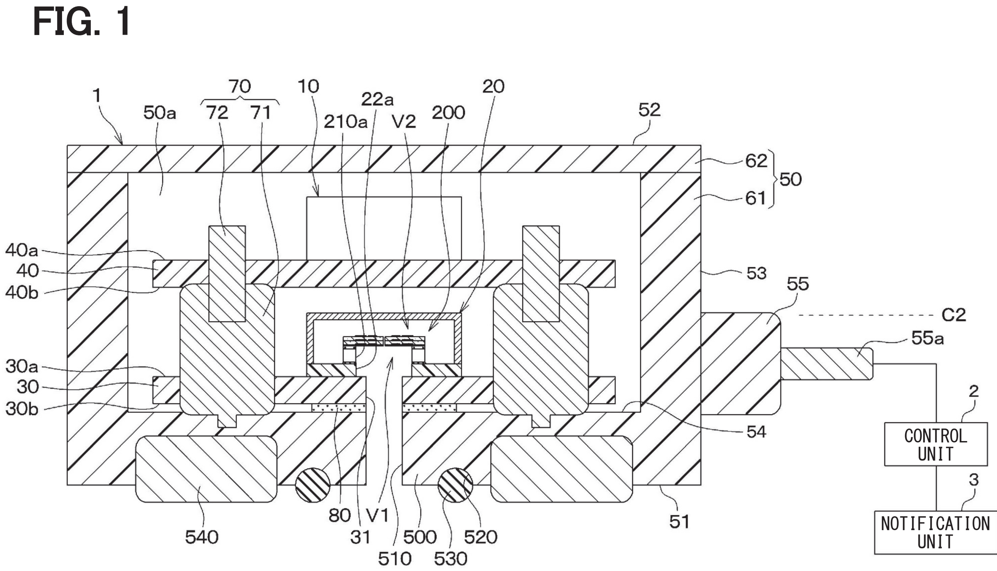

As shown in FIG. 1, the state determining system of the present embodiment includes a diagnostic sensor 1, a control unit 2, and a notification unit 3. First, the configuration of the diagnostic sensor 1 will be described.

The diagnostic sensor 1 includes a vibration sensor 10, a sound sensor 20, a first wiring board 30, a second wiring board 40, and a housing 50. In the present embodiment, an example is described in which one vibration sensor 10 and one sound sensor 20 are provided. However, a plurality of vibration sensors 10 and/or sound sensors 20 may be provided.

The vibration sensor 10 includes a vibration detection element configured to output a vibration detection signal in accordance with applied vibrations. The vibration sensor 10 of the present embodiment outputs a vibration detection signal corresponding to vibrations within a first detection frequency range. The first detection frequency range may be 1 Hz to 10 kHz. The configuration of the vibration detection element constituting the vibration sensor 10 is not particularly limited. The vibration detection element may be a contact-type piezoelectric element, or an electromagnetic or electrostatic acceleration detection element or angular velocity detection element. When the vibration detection element is configured as an acceleration detection element, the vibration detection element may be composed of multiple acceleration detection elements so that one to three axes serve as detection axes. Further, when the vibration detection element is configured as an acceleration detection element and an angular velocity detection element, the vibration detection element may be composed of multiple acceleration detection elements and angular velocity detection elements so that one to six axes serve as detection axes. Although the vibration sensor 10 also outputs signals outside the first detection frequency range, signals outside the first detection frequency range are signals with low reliability and do not correspond to signals according to vibration. Thus, the first detection frequency range in the present embodiment can be regarded as the range in which vibration detection signals that satisfy the required reliability are output.

The sound sensor 20 includes a sound detection element 200 that outputs a sound detection signal in response to the applied sound. Then, the sound sensor 20 of the present embodiment outputs a sound detection signal in response to sound within the second detection frequency range. The second detection frequency range is, for example, set to 20 Hz to 20 kHz. In other words, the second detection frequency range includes higher frequencies than the first detection frequency range, and the sound sensor 20 of the present embodiment is configured to detect the state of the target in higher frequency than the vibration sensor 10. Additionally, the second detection frequency range of the present embodiment includes a common frequency range that is common with the first detection frequency range. It should be noted that the sound detection element 200 constituting the sound sensor 20 is not particularly limited, and may be of the piezoelectric type, electrostatic type, or capacitor type. In this embodiment, the sound detection element 200 is of the piezoelectric type. Additionally, although the sound sensor 20 is also configured to output signals outside the second detection frequency range, the signals outside the second detection frequency range have low reliability and do not correspond to signals in response to sound. Therefore, the second detection frequency range of the present embodiment can be regarded as the range in which sound detection signals that satisfy the required reliability are output.

Here, the vibration sensor 10 of the present embodiment is configured such that the vibration detection element is packaged, and the sound sensor 20 of the present embodiment is configured such that the sound detection element is packaged. In this case, since the vibration sensor 10 and the sound sensor 20 are disposed on the first and second wiring boards 30 and 40, as will be described later, it is preferable that they have a leadless structure for ease of assembly, and are of the QFN type in which pad-shaped terminals are arranged on the outer surface of the vibration sensor 10 and the sound sensor 20. It should be noted that QFN stands for Quad Flat Non-leaded Package. In addition, in FIG. 1, the packaged vibration sensor 10 and sound sensor 20 are shown schematically.

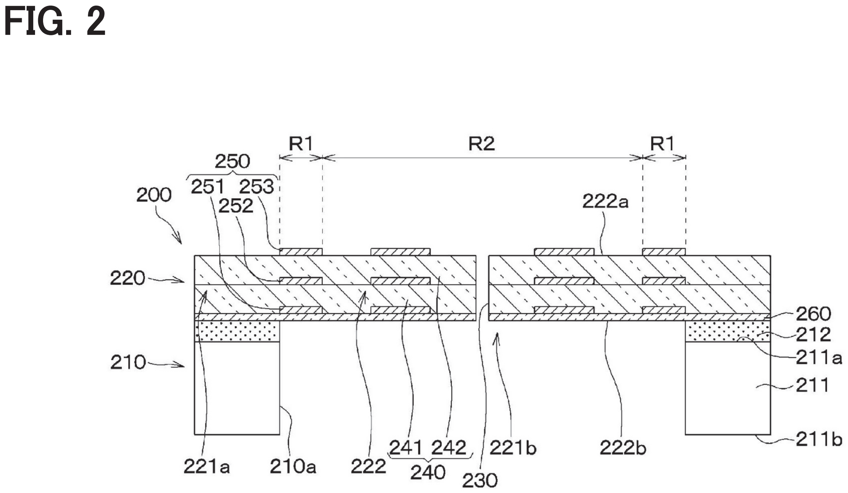

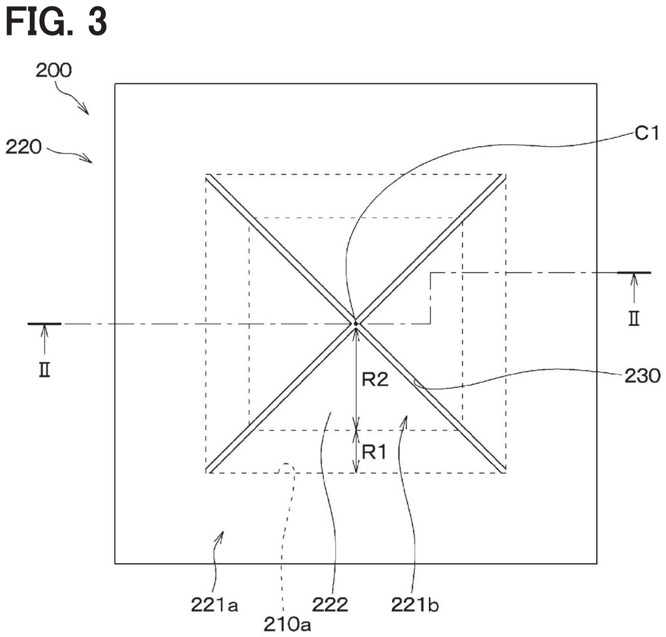

The configuration of the sound sensor 20 in the present embodiment will be briefly described below. First, the configuration of the sound detection element 200 that constitutes the sound sensor 20 will be briefly explained with reference to FIGS. 2 and 3. Note that FIG. 2 is a cross-sectional view taken along line II-II in FIG. 3.

As shown in FIGS. 2 and 3, the sound detection element 200 includes a support member 210 and a vibrating portion 220. The sound detection element 200 has a rectangular planar shape. The support member 210 includes a support substrate 211 having a facing surface 211a and an opposite surface 211b, and an insulating film 212 formed on the facing surface 211a of the support substrate 211. The support substrate 211 may be formed of a silicon substrate, and the insulating film 212 may be formed of an oxide film.

The vibrating portion 220 is disposed on the support member 210. Further, the support member 210 defines a recess 210a for suspending the inner edge side of the vibrating portion 220. Accordingly, the vibrating portion 220 includes a supported region 221a disposed on the support member 210, and a floating region 221b that is connected to the supported region 221a and is suspended over the recess 210a. In this embodiment, the shape of the opening end of the recess 210a facing the vibrating portion 220 is a planar rectangular shape. Thus, the entire floating region 221b has a planar rectangular shape.

The floating region 221b defines a slit 230 penetrating the floating region 221b in the thickness direction. In this embodiment, the slit 230 divides the floating region 221b into four sections. Specifically, two slits 230 are formed to pass through the central portion C1 of the floating region 221b and extend toward the opposing corners of the floating region 221b. In other words, the slits 230 extend from each corner of the planar rectangular floating region 221b toward the central portion C1, and intersect at the central portion C1. As a result, the floating region 221b is separated into four vibrating sections 222, each having a substantially planar triangular shape.

Each of the vibrating sections 222 is configured as a cantilever, with its end close to the supported region 221a serving as a fixed end and its tip away from the supported region 221a serving as a free end. Hereinafter, the surface of the vibrating section 222 facing away from the support member 210 will be referred to as a first surface 222a, and the surface of the vibrating section 222 facing away from the support member 210 will be referred to as a second surface 222b. In this embodiment, each of the vibrating sections 222 corresponds to a detection unit configured to output a sound detection signal upon application of sound.

The vibrating portion 220 includes a piezoelectric film 240 and an electrode film 250 connected to the piezoelectric film 240. In this embodiment, the piezoelectric film 240 includes a lower piezoelectric film 241 and an upper piezoelectric film 242 laminated on the lower piezoelectric film 241. The lower piezoelectric film 241 and the upper piezoelectric film 242 are formed using lead-free piezoelectric ceramics such as scandium aluminum nitride (ScAlN) or aluminum nitride (AIN).

The electrode film 250 is formed at predetermined locations of the vibrating sections 222 to be connected to the piezoelectric film 240, and is made of materials such as molybdenum, copper, platinum, palladium, or titanium. In this embodiment, the electrode film 250 includes a lower electrode film 251 formed below the lower piezoelectric film 241, an intermediate electrode film 252 formed between the lower piezoelectric film 241 and the upper piezoelectric film 242, and an upper electrode film 253 formed on the upper piezoelectric film 242. The lower electrode film 251 and the intermediate electrode film 252 are arranged to face each other with the lower piezoelectric film 241 disposed between the lower electrode film 251 and the intermediate electrode film 252. The intermediate electrode film 252 and the upper electrode film 253 are arranged to face each other with the upper piezoelectric film 242 disposed between the intermediate electrode film 252 and the upper electrode film 253.

Here, when the vibrating sections 222 are supported in a cantilever manner as described above, the stress generated when the vibrating sections 222 (i.e., the piezoelectric film 240) vibrate tends to be greater on the fixed ends of the vibrating sections 222, where the vibrating sections 222 are supported, than on the free ends of the vibrating sections 222. Thus, each of the vibrating sections 222 has a first region R1, where stress tends to be greater, and a second region R2, where stress tends to be smaller. In the present embodiment, the electrode film 250 is formed in each of the first region R1 and the second region R2. It should be noted that the electrode film 250 formed in the first region R1 and the electrode film 250 formed in the second region R2 are mutually insulated.

The electrode film 250 formed in the first region R1 is connected to an electrode unit (not shown) via wiring or the like formed in the supported region 221a. In the present embodiment, the lower electrode film 251, the intermediate electrode film 252, and the upper electrode film 253 of the vibrating sections in the first region R1 are connected to the electrode unit to output the change in charge of the vibrating sections in the first region R1 as a single sound detection signal.

Further, the lower electrode film 251, the intermediate electrode film 252, and the upper electrode film 253 formed in the second region R2 are not electrically connected to the electrode unit and are in a floating state. Thus, the lower electrode film 251, the intermediate electrode film 252, and the upper electrode film 253 formed in the second region R2 are not strictly necessary. However, in this embodiment, the lower electrode film 251, the intermediate electrode film 252, and the upper electrode film 253 are provided to protect the portions of the lower piezoelectric film 241 and the upper piezoelectric film 242 that are located in the second region R2.

Furthermore, the vibrating portion 220 of the present embodiment includes a base film 260 on which the lower piezoelectric film 241 and the lower electrode film 251 are disposed. In other words, the piezoelectric film 240 and the electrode film 250 are disposed on the support member 210 via the base film 260. In this embodiment, the second surface 222b of each of the vibrating sections 222 is formed by the base film 260.

The base film 260 is not strictly necessary, but the base film 260 is provided to facilitate crystal growth when forming the lower piezoelectric film 241. In this embodiment, the base film 260 is made of aluminum nitride or the like. In addition, the piezoelectric film 240 has a thickness of about 1 µm, and the base film 260 has a thickness of several tens of nanometers. In other words, the base film 260 is made extremely thin compared to the piezoelectric film 240.

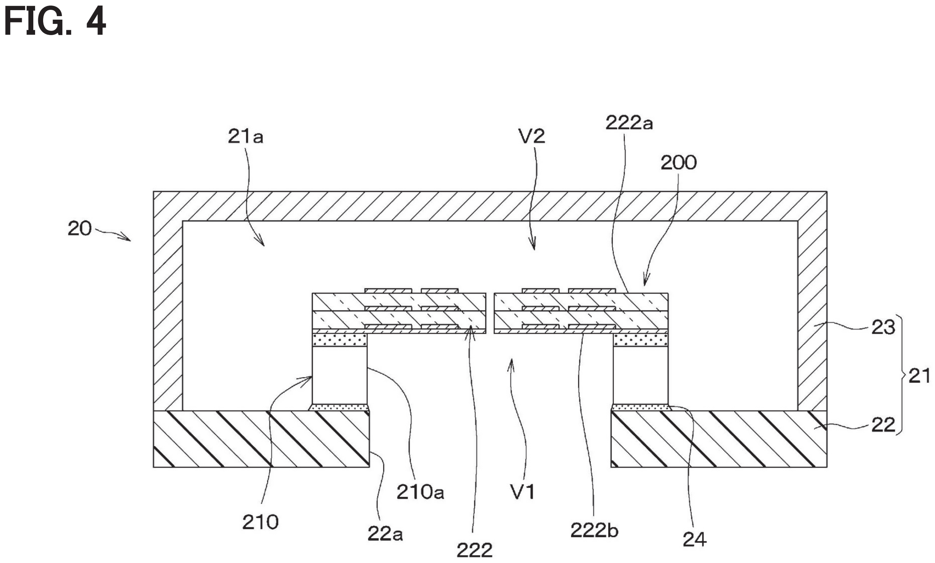

The above describes the configuration of the sound detection element 200. The sound sensor 20 of this embodiment is packaged as described above, and as shown in FIG. 4, the sound detection element 200 is housed within a box-shaped casing 21 defining an internal space 21a. In this embodiment, the casing 21 includes a wiring board 22 and a lid 23, which is disposed on the wiring board 22 and forms the internal space 21a. Although details are omitted, the wiring board 22 is appropriately wired to enable the formation of a QFN structure, and is provided with a communication hole 22a that connects the outside of the casing 21 to the internal space 21a. The support member 210 of the sound detection element 200 is arranged on the wiring board 22 via a bonding member 24 so that the communication hole 22a is connected to the recess 210a. In addition, the sound detection element 200 is electrically connected to the wiring board 22 via a wire or the like (not shown).

In such sound sensor 20, when sound is introduced into the recess 210a through the communication hole 22a, the sound is applied to the vibrating sections 222, using the second surfaces 222b of the vibrating sections 222 as a pressure-receiving surface. The vibrating sections 222 vibrate in response to the differential pressure between the first surface 222a and the second surface 222b. Then, since the piezoelectric film 240 constituting the vibrating sections 222 deforms in response to the vibration, the sound sensor 20 outputs a change in charge corresponding to the deformation of the piezoelectric film 240 as a sound detection signal.

Furthermore, since the sound detection element 200 is arranged in the internal space 21a of the sound sensor 20 as described above, it can be said that the internal space 21a is substantially divided into a pressure-receiving surface space V1, which is surrounded by the recess 210a, and a back space V2, which is different from the pressure-receiving surface space V1. It should be noted that the back space V2 can be defined as the space within the internal space 21a excluding the pressure-receiving surface space V1, or as the space that affects the first surface 222a of the vibrating sections 222.

The above describes the configuration of the sound sensor 20 in the present embodiment. As shown in FIG. 1, the first wiring board 30 and the second wiring board 40 are each constituted by a printed circuit board having a first surface 30a, 40a and a second surface 30b, 40b, respectively. Although not specifically illustrated, the first wiring board 30 and the second wiring board 40 are each provided with a first surface wiring formed on the first surface 30a, 40a, and a second wiring formed on the second surface 30b, 40b. The first surface wiring and the second surface wiring are electrically connected as appropriate via through-hole wiring or the like that penetrates the first wiring board 30 and the second wiring board 40 in the thickness direction.

The sound sensor 20 is disposed on the first surface 30a of the first wiring board 30, and is electrically connected to the first wiring board 30. Specifically, the first wiring board 30 defines a communication hole 31 that penetrates the first wiring board 30 between the first surface 30a and the second surface 30b. The sound sensor 20 is disposed on the first surface 30a of the first wiring board 30 so that the communication hole 31, the communication hole 22a of the sound sensor 20, and the recess 210a are fluidly connected.

The vibration sensor 10 is disposed on the first surface 40a of the second wiring board 40 and is electrically connected to the second wiring board 40. Although not particularly illustrated, electronic components for noise reduction, such as resistors and capacitors, are also appropriately arranged on the first wiring board 30 and the second wiring board 40.

The housing 50 is formed using materials such as resin or metal, and has an approximately rectangular parallelepiped shape with an outer first surface 51, an outer second surface 52, and four side surfaces 53 that connect the outer first surface 51 and the outer second surface 52. The housing 50 also defines therein a housing space 50a. In this embodiment, the outer first surface 51 corresponds to the facing surface.

The housing 50 is a portion that is fixed to a mounting member 300 such as a machine tool, as will be described later. In this embodiment, the outer first surface 51 is provided to face the mounting member 300. Hereinafter, a portion of the housing 50 that faces the mounting member 300 and constitutes the outer first surface 51 will be referred to as a facing portion 500, and a surface of the facing portion 500 opposite to the outer first surface 51 will be referred to as an inner first surface 54.

In this embodiment, the housing 50 is assembled from a bottomed cylindrical case 61 having an opening, and a lid 62 that closes the opening of the case 61. The facing portion 500 is formed by the bottom part of the case 61. In this embodiment, the housing 50 is described as having a substantially rectangular parallelepiped shape with the four side surfaces 53, but the external shape of the housing 50 is not particularly limited. However, since the housing 50 is the part that the operator handles when the diagnostic sensor 1 is mounted to the mounting member 300, it is preferable that the housing 50 has a shape with at least two side surfaces 53 in order to improve handling.

The housing 50 defines a through-hole 510 in the facing portion 500 to guide sound from the outside of the housing 50. In this embodiment, the through-hole 510 is cylindrical with a rectangular cross-section. However, the through-hole 510 may be formed in a tapered (i.e., horn-shaped) manner, with its width narrowing from the outer first surface 51 toward the inner first surface 54, to facilitate sound guidance.

The outer first surface 51 of the housing 50 defines an annular groove 520 around the through-hole 510. In this embodiment, the annular groove 520 is formed in a ring shape centered on the central axis of the through-hole 510. An O-ring, serving as a sealing member 530, is disposed in the annular groove 520. The sealing member 530 may be a square ring having a rectangular cross-sectional shape. Here, the annular groove 520 and the sealing member 530 are described, but the groove 520 and the sealing member 530 may have a rectangular frame shape, and their specific shapes are not particularly limited. Furthermore, the groove 520 may be a dovetail groove, in which the width increases with increasing depth from the outer first surface 51, to prevent the sealing member 530 from coming off.

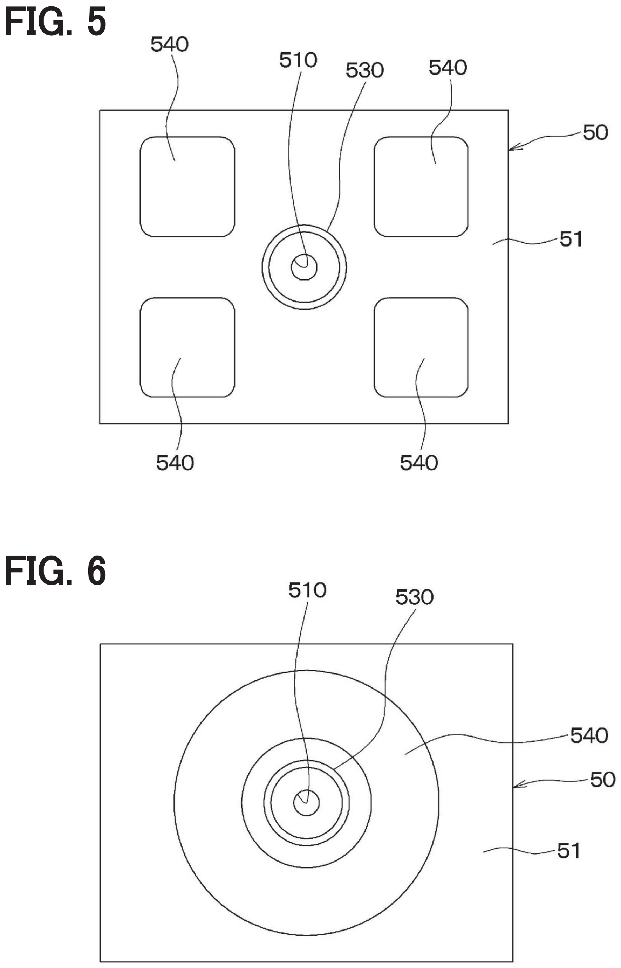

In the housing 50, a magnet 540, serving as an attachment member, is disposed on the outer first surface 51 of the housing 50. In the present embodiment, the magnet 540 is integrated with the housing 50 by means such as press-fitting, screw fastening, or insert molding. Additionally, the magnet 540 is provided on the side of the sealing member 530 opposite to the through-hole 510. In the present embodiment, as shown in FIG. 5, the magnet 540 are multiple magnets 540. The multiple magnets 540 are rotational symmetric about the sealing member 530 in the direction normal to the outer first surface 51. In the present embodiment, since the groove 520 is formed in an annular shape centered on the central axis of the through-hole 510, it can also be said that the magnets 540 are rotational symmetric about the through-hole 510 as a reference. Additionally, as shown in FIG. 6, the magnet 540 may be formed in an annular shape to be rotational symmetric about the sealing member 530 as a reference. In this case, although not specifically illustrated, the magnet 540 may be provided in a frame-shape. In FIG. 1, the vertical direction on the page corresponds to the normal direction.

The housing space 50a of the housing 50 accommodates the vibration sensor 10, the sound sensor 20, the first wiring board 30, and the second wiring board 40. Specifically, the first wiring board 30 and the second wiring board 40 are fixed to the facing portion 500 of the housing 50 via fixing members 70, while the first wiring board 30 and the second wiring board 40 are stacked with a predetermined spacing therebetween. The predetermined spacing refers to a distance such that the sound sensor 20 and the second wiring board 40 do not come into contact and are separated from each other. In the present embodiment, each of the fixing members 70 corresponds to the fixing member.

More specifically, the second surface 30b of the first wiring board 30 faces the facing portion 500, a first fixing member 71 is inserted into an outer edge portion of the first wiring board 30, and the first fixing member 71 is fastened into the facing portion 500, thereby fixing the first wiring board 30 to the housing 50. In the present embodiment, the first wiring board 30 is fixed to the housing 50 by four first fixing members 71, which are arranged to surround the sound sensor 20 when viewed in the normal direction. In addition, the first wiring board 30 is fixed to the housing 50 such that the communication hole 31 and the through-hole 510 are fluidly connected to each other. In this embodiment, the communication hole 31 and the through-hole 510 are each cylindrical, and the first wiring board 30 is fixed to the housing 50 so that the respective central axes of the communication hole 31 and the through-hole 510 are aligned. Further, the first fixing members 71 of the present embodiment are screw members each of which has a male-female threaded structure. In the male-female structure, a male thread structure is formed on one end and a female thread structure is formed on the other end. The one end of each of the first fixing members 71 is fastened to the facing portion 500.

The second wiring board 40 is disposed on the first wiring board 30 such that the second surface 30b faces the first wiring board 30, the second fixing members 72 are inserted through the outer edge portion of the second wiring board 40 and fastened to the first fixing members 71. The second fixing members 72 of the present embodiment are screw members each of which has a male thread structure formed at one end, and the male thread structure of the second fixing members 72 at one end is fastened to the female thread structure of the first fixing members 71. Further, in the present embodiment, the first wiring board 30 and the second wiring board 40 are arranged so that the vibration sensor 10 and the sound sensor 20 overlap with each other in the normal direction. Since four first fixing members 71 are arranged to surround the sound sensor 20, four second fixing members 72 are arranged to surround the vibration sensor 10.

Here, in the present embodiment, the fixing members 70 are arranged to overlap with the magnets 540 in the normal direction. In other words, the fixing members 70 are arranged directly above the magnets 540. This arrangement of the fixing members 70 allows vibration of the mounting member to easily transmit to the fixing members 70 through the magnets 540, and to the vibration sensor 10 from the fixing members 70 through the second wiring board 40 when the diagnostic sensor 1 is mounted on the mounting member 300.

Further, in the present embodiment, the first wiring board 30 and the second wiring board 40 are fixed to the housing 50 by the fixing members 70. Thus, when the fixing members 70 are made of a conductive metal, the grounds of the first wiring board 30 and the second wiring board 40 can be connected to the housing ground via the fixing members 70.

A sealing member 80 is disposed between the periphery of the communication hole 31 on the second surface 30b of the first wiring board 30 and the inner first surface 54. The sealing member 80 is intended to suppress sound guided from the through-hole 510 from leaking out between the second surface 30b of the first wiring board 30 and the inner first surface 54. Since the sound sensor 20 is disposed on the first wiring board 30, it is preferable that the sealing member 80 be made of a material with a low elastic modulus, such as a silicone-based adhesive, so that vibration is less likely to be transmitted from the housing 50 to the first wiring board 30. Further, the sealing member 80 may be formed in a sheet shape not to block the communication hole 31 or the through-hole 510.

The housing 50 is provided with a connector 55 on the side surface 53, and the connector 55 has multiple terminals 55a that are connected to the first wiring board 30 and the second wiring board 40 as well as to the control unit 2. In the present embodiment, the connector 55 is disposed between the outer first surface 51 of the housing 50 and the central portion C2 between the outer first surface 51 and the outer second surface 52 of the housing 50 in the thickness direction.

The first and second wiring boards 30 and 40 are electrically connected to the terminals 55a, for example, by lead wires or flexible boards, although this is not specifically shown in the figures. In addition, the terminals 55a may be covered with a coating material or the like that has environmental resistance. Furthermore, in this example, the connector 55 is described as a male connector having terminals 55a. However, the connector 55 may alternatively be a female connector into which external terminals are inserted.

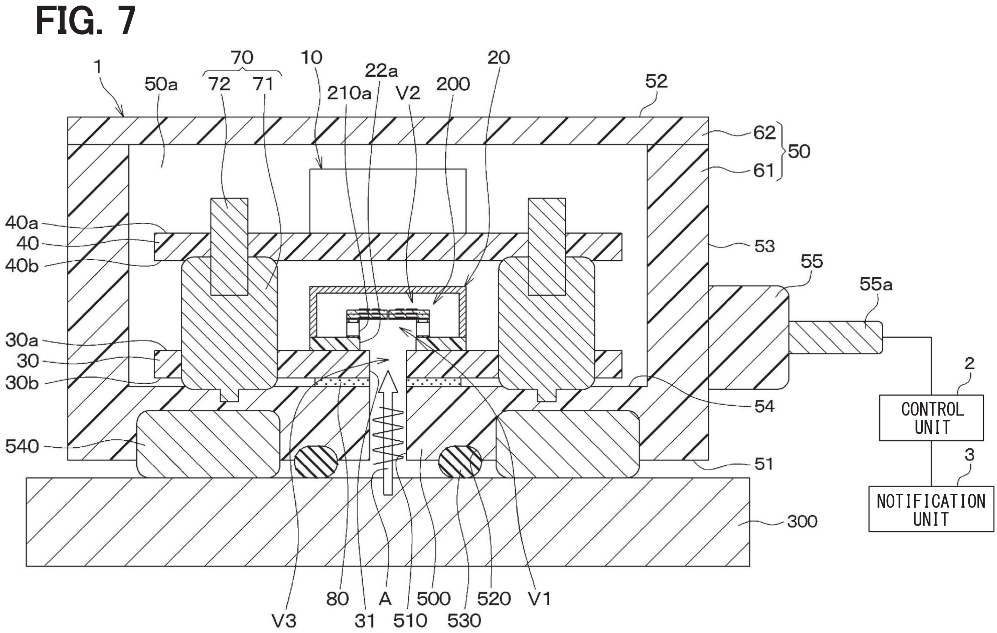

The above describes the configuration of the diagnostic sensor 1 in the present embodiment. Then, as shown in FIG. 7, the diagnostic sensor 1 is provided on the mounting member 300 such as a machine tool by the magnet while the sealing member 530 is compressed.

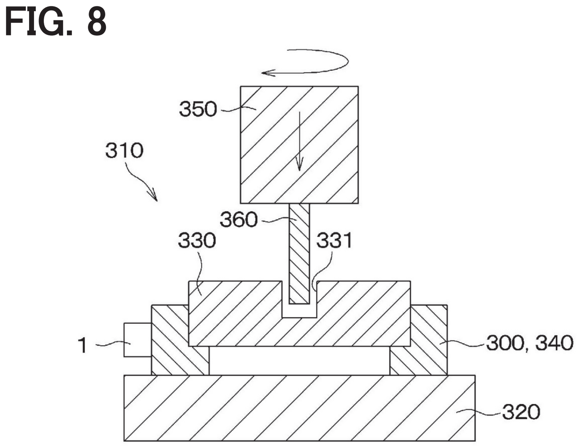

For example, as shown in FIG. 8, the machine tool 310 includes a stage 320, a vise 340 that is placed on the stage 320 and configured to fix a workpiece 330, a spindle holder 350, and a drill 360 that is mounted on the spindle holder 350 to process the workpiece 330. The machine tool 310 forms a hole 331 in the workpiece 330 by displacing the drill 360. In the present embodiment, the drill 360 corresponds to a cutting tool as well as a determination target. Examples of the workpiece 330 include materials used for metal cutting processes, such as SUS (stainless steel), and AL (aluminum).

In the present embodiment, the diagnostic sensor 1 is fixed to the vise 340, which serves as the mounting member 300. In this embodiment, an example is described in which the mounting member 300 is the vise 340. However, the diagnostic sensor 1 may be disposed on the workpiece 330 or on the stage 320. In this case, the workpiece 330 or the stage 320 corresponds to the mounting member 300.

The following describes the vibration detection signal output from the vibration sensor 10 and the sound detection signal output from the sound sensor 20 when the diagnostic sensor 1 is fixed to the vise 340, which serves as the mounting member 300.

When drilling the workpiece 330, the workpiece 330 is fixed to the vise 340, and the spindle holder 350 is rotated and displaced downward to press the drill 360 against the workpiece 330, thereby forming a hole 331 in the workpiece 330. As drilling continues and the tip of the drill 360 becomes worn, the contact friction between the tip of the drill 360 and the workpiece 330 increases at the bottom of the hole 331, resulting in an increase in cutting resistance.

When the contact friction increases, it becomes more difficult for the spindle holder 350 to properly rotate and displace the drill 360 downward. As a result, the spindle holder 350 undergoes micro-vibrations, causing the drill 360 to rub against the sidewall of the hole 331. When the drill 360 rubs against the sidewall of the hole 331, the vibration of the workpiece 330 increases at specific frequencies, and the vibration and sound of the vise 340 (i.e., the mounting member 300) that secures the workpiece 330 also increase accordingly, following the vibration of the workpiece 330.

Then, since the vibration of the vise 340 (i.e., the mounting member 300) is transmitted via the housing 50 and the second wiring board 40, the vibration sensor 10 outputs a vibration detection signal corresponding to the transmitted vibration. As shown by arrow A in FIG. 7, the sound sensor 20 outputs a sound detection signal corresponding to the transmitted sound, since the sound generated by the vibration of the vise 340 (i.e., the mounting member 300) is transmitted to the vibrating sections 222 via the through-hole 510. In this case, as the drill 360 becomes more worn, the vibration and sound at specific frequencies increase, resulting in larger vibration detection signals and sound detection signals. Wear of the drill 360 refers to the transition of the drill 360 from a normal state to an abnormal state.

Here, the second wiring board 40, on which the vibration sensor 10 is disposed, has a resonance frequency. The resonance frequency of the second wiring board 40 varies depending on factors such as the position where the fixing members 70 are inserted. For example, in the present embodiment, the four fixing members 70 are arranged to surround the vibration sensor 10. The smaller the area enclosed by the fixing members 70, the higher the resonance frequency becomes.

Thus, when the frequency of the vibration generated during an abnormal state of the drill 360 (hereinafter also referred to as an abnormal vibration frequency) is known, it is preferable that the second wiring board 40 is fixed such that the position and other parameters of the fixing members 70 are adjusted so that the resonance frequency matches the abnormal vibration frequency. As a result, the sensitivity at the abnormal vibration frequency can be enhanced, allowing the vibration detection signal to be increased. In the present embodiment, the abnormal vibration frequency corresponds to a desired frequency of vibration due to the mounting member on which the diagnostic sensor 1 is mounted.

On the other hand, when it is known that the abnormal vibration frequency differs from the first detection frequency range, or when the abnormal vibration frequency is unknown, it is preferable that the second wiring board 40 is fixed with the position of the fixing members 70 adjusted so that the resonance frequency falls outside the first detection frequency range. As a result, it is possible to suppress the resonance frequency of the second wiring board 40 from becoming noise in the vibration detection signal. The case where the abnormal vibration frequency is unknown is, in other words, a situation where the application target is not limited.

Similarly, the sound sensor 20 outputs a detection signal corresponding to the sound propagating through the through-hole 510 and the communication hole 31. When the diagnostic sensor 1 is mounted on the mounting member 300, the closed space including the through-hole 510 and the communication hole 31 serves as an acoustic space V3 that affects the second surface 222b of the vibrating sections 222. The acoustic space V3 has a resonance frequency. In this embodiment, the acoustic space V3 can also be described as the space that is enclosed by the pressure-receiving surface space V1 in the sound sensor 20, the mounting member 300, the housing 50, the first wiring board 30, and the sealing member 80. The resonance frequency depends on the volume of the acoustic space V3. For example, the smaller the volume of the acoustic space V3, the higher the resonance frequency. Further, the volume of the acoustic space V3 can be easily changed, for example, by changing the placement location of the sealing member 530.

Therefore, when the frequency of the sound generated when the drill 360 is abnormal (hereinafter also referred to as the abnormal sound frequency) is known, it is preferable that the volume of the acoustic space V3 is adjusted so that the resonance frequency matches the abnormal sound frequency. As a result, the sensitivity at the abnormal sound frequency can be enhanced, allowing the sound detection signal to be increased. In this embodiment, the abnormal sound frequency corresponds to a desired frequency in the sound due to the mounting member on which the diagnostic sensor is mounted.

On the other hand, when it is known that the abnormal sound frequency differs from the second detection frequency range, or when the abnormal sound frequency is unknown, it is preferable that the volume of the acoustic space V3 is adjusted so that the resonance frequency falls outside the second detection frequency range. As a result, it is possible to suppress the resonance frequency of the acoustic space V3 from becoming noise in the sound detection signal. The case where the abnormal sound frequency is unknown is, in other words, a situation where the application target is not limited.

Furthermore, according to the sound sensor 20 of the present embodiment, increasing the size of the back space V2 makes it more difficult for pressure that can affect the one surface 222a to fluctuate, thereby improving reliability. Thus, the sound sensor 20 may be configured such that a through-hole is formed in the lid 23 shown in FIG. 4, allowing the internal space 21a of the casing 21 and the housing space 50a of the housing 50 to communicate with each other, thereby increasing the size of the back space V2.

As described above, the diagnostic sensor 1 outputs a vibration detection signal and a sound detection signal.

The control unit 2 is constituted by a microcomputer or the like equipped with a storage unit comprising a CPU, ROM, RAM, flash memory, HDD, or other non-volatile physical storage media. CPU stands for Central Processing Unit, ROM stands for Read Only Memory, RAM stands for Random Access Memory, and HDD stands for Hard Disk Drive.

The control unit 2 realizes various control operations by having the CPU read and execute programs (i.e., the routines described later) from the storage unit such as ROM. The storage unit, such as ROM, is pre-stored with various types of data (for example, initial values, lookup tables, maps, etc.) used during the execution of programs.

In the present embodiment, the control unit 2 is connected to the vibration sensor 10 and the sound sensor 20 via the connector 55, and acquires the vibration detection signal and the sound detection signal. The control unit 2 performs analyses such as FFT (Fast Fourier Transform) on the vibration detection signal and the sound detection signal to derive a vibration determination signal and a sound determination signal, determines the state based on these signals, and transmits the determination result. In the present embodiment, the control unit 2 performs abnormality determination of the drill 360, which is the determination target, as a state determination. In addition, the control unit 2 of the present embodiment further performs self-diagnosis determination of the vibration sensor 10 and the sound sensor 20, as well as filter setting processing.

The notification unit 3 includes a display unit, a sound unit, and the like, and is connected to the control unit 2. When the notification unit 3 receives a determination signal from the control unit 2, the notification unit 3 provides a notification corresponding to the determination signal.

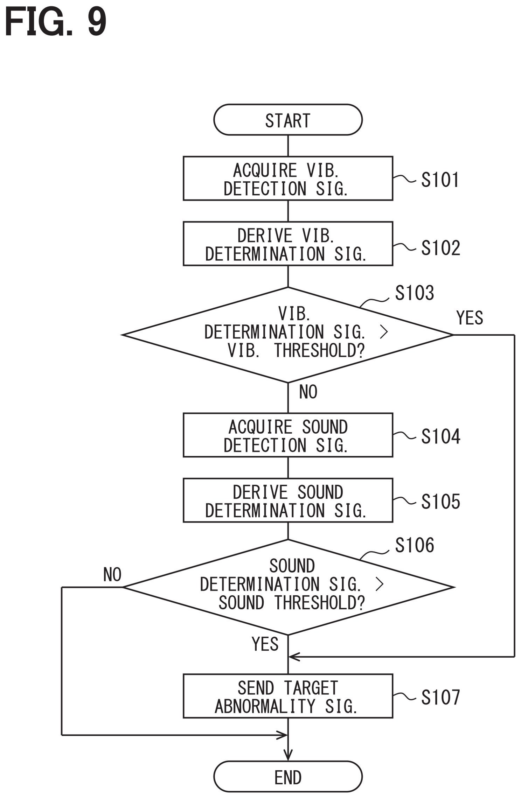

Next, the abnormality determination as the state determination by the control unit 2 will be described with reference to FIG. 9. In the following, an example will be described in which the diagnostic sensor 1 is attached to the machine tool 310 as described above, and abnormality determination of the drill 360, which serves as a cutting tool, is performed. In addition, in the present embodiment, the abnormality determination is performed at predetermined intervals after the machine tool 310 is put into operation.

The control unit 2 acquires a vibration detection signal in step S101, and in step S102, derives a vibration determination signal by performing FFT analysis or the like on the vibration detection signal. Then, in step S103, the control unit 2 compares the vibration determination signal with a vibration threshold value. In the present embodiment, the first detection frequency range is preliminarily divided into multiple frequency ranges, and the vibration determination signal and the vibration threshold value are compared for each of the divided frequency ranges. The vibration threshold value is set in advance by conducting experiments or the like to detect the vibration of the vise 340 when the drill 360 is worn. Further, the vibration threshold value for each frequency range may be the same, or at least a part of the vibration threshold value may be different in each frequency range. In the present embodiment, the vibration threshold value corresponds to a vibration determination element.

When the control unit 2 determines that the vibration determination signal is greater than the vibration threshold value (i.e., step S103: YES), in step S107, it transmits a target abnormality signal indicating that the drill 360 is abnormal to the notification unit 3, and ends the process. As a result, the notification unit 3 performs a process to inform the operator that an abnormality such as wear has occurred in the drill 360.

When the control unit 2 determines that the vibration determination signal is equal to or less than the threshold value (i.e., step S103: NO), the control unit 2 acquires the sound detection signal in step S104. Then, in step S105, the control unit 2 derives a sound determination signal by performing FFT analysis or the like on the sound detection signal. If a filter is set through the filter setting process, which will be described later, the sound determination signal is derived using the filter.

Subsequently, in step S106, the control unit 2 compares the sound determination signal with a sound threshold value. In the present embodiment, the second detection frequency range is preliminarily divided into multiple frequency ranges, and the sound determination signal in each divided frequency range is compared with the sound threshold value. The sound threshold value is set in advance by conducting experiments or the like to detect the sound generated from the vise 340 when the drill 360 is worn. Further, the sound threshold value for each frequency range may be the same, or at least a part of the sound threshold value may be different in the divided frequency ranges. In the present embodiment, the sound threshold value corresponds to a sound determination element.

When the control unit 2 determines that the sound determination signal is greater than the sound threshold value (i.e., step S106: YES), the control unit 2 executes the process of step S107. When the control unit 2 determines that the sound determination signal is equal to or less than the sound threshold value (i.e., step S106: NO), the control unit 2 ends the process.

In the present embodiment, as described above, an abnormality determination is performed as the state determination. Here, an example has been described in which the control unit 2 performs determination regarding vibration in steps S101 to S103, and then performs determination regarding sound in steps S104 to S106. However, the control unit 2 may perform the determination regarding sound in steps S104 to S106 first, and then perform the determination regarding vibration in steps S101 to S103. Further, here, an example has been described in which the drill 360, which is the determination target, is judged to be abnormal when either the vibration determination signal or the sound determination signal is abnormal. However, in the present embodiment, the first detection frequency range, in which a vibration detection signal is output, and the second detection frequency range, in which a sound detection signal is output, include a common frequency range. Thus, for the common frequency range, the control unit 2 may determine that the drill 360, which is the determination target, is abnormal only when both the vibration determination signal and the sound determination signal are abnormal. Since the vibration determination signal is based on the vibration detection signal and the sound determination signal is based on the sound detection signal, it can be said that the abnormality determination is a determination in which the vibration detection signal and the sound detection signal are each compared with their respective threshold values.

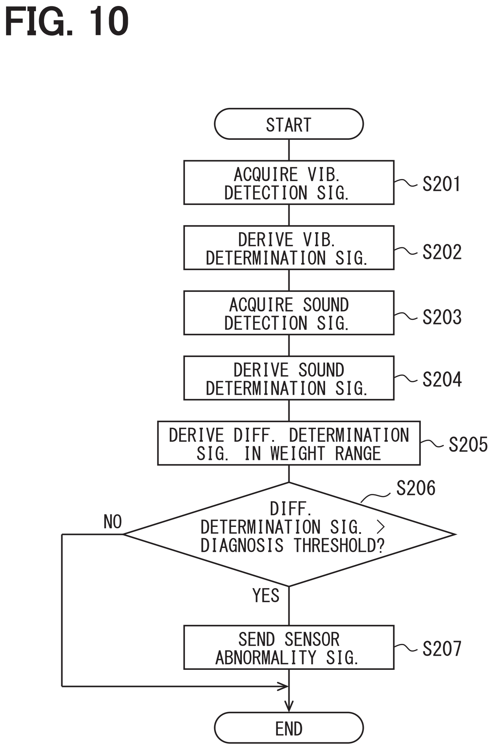

Next, the self-diagnosis determination executed by the control unit 2 will be described with reference to FIG. 10. The self-diagnosis determination is performed when, as in the present embodiment, the first detection frequency range in which a vibration detection signal is output and the second detection frequency range in which a sound detection signal is output include a common frequency range. In addition, the self-diagnosis determination is performed at predetermined intervals after the machine tool 310 has started operating. In the present embodiment, it is assumed that the self-diagnosis determination is performed at intervals longer than those for abnormality determination, and, for example, is carried out every several to several tens of hours.

The control unit 2 acquires the vibration detection signal in step S201, and in step S202, derives a vibration determination signal by performing FFT analysis or the like on the vibration detection signal. Additionally, the control unit 2 acquires the sound detection signal in step S203, and in step S204, derives a sound determination signal by performing FFT analysis or the like on the sound detection signal. If a filter is set through the filter setting process, which will be described later, the sound determination signal is derived using the filter.

Next, in step S205, the control unit 2 derives a difference determination signal, which is the difference between the vibration determination signal and the sound determination signal, within the common range between the first detection frequency range and the second detection frequency range. In the present embodiment, since the first detection frequency range is set to 1 Hz to 10 kHz and the second detection frequency range is set to 20 Hz to 20 kHz, the common range is 20 Hz to 10 kHz. Further, in the present embodiment, when deriving the difference determination signal, the frequency range of the common range is preliminarily divided into multiple frequency ranges, and the difference determination signal is derived for each of the divided frequency ranges.

Then, in step S206, the control unit 2 determines whether the differential determination vibration is greater than a diagnostic threshold. In the present embodiment, the differential determination vibration in each of the divided frequency ranges is compared with the diagnostic threshold. The diagnostic threshold is set in advance based on experiments or the like, according to the difference between the vibration determination signal and the sound determination signal when the vibration sensor 10 and the sound sensor 20 are in a normal state. The diagnostic threshold for each of the divided frequency ranges may be the same, or at least a part of the diagnostic threshold may be different depending on the frequency ranges. In the present embodiment, the diagnostic threshold corresponds to a diagnostic determination element.

When the control unit 2 determines that the difference determination signal is greater than the diagnostic threshold (i.e., step S206: YES), the control unit 2 sends, in step S207, a sensor abnormality signal indicating that at least one of the sensors 10 or 20 is abnormal to the notification unit 3 and ends the process. As a result, the notification unit 3 performs a process to notify the operator that at least one of the vibration sensor 10 or the sound sensor 20 is abnormal. In addition, when the control unit 2 determines that the difference determination signal is less than or equal to the diagnostic threshold (i.e., step S206: NO), the process ends.

Since the vibration determination signal is based on the vibration detection signal, and the sound determination signal is based on the sound detection signal, the self-diagnosis determination can also be regarded as a determination that compares the vibration detection signal and the sound detection signal with their respective thresholds.

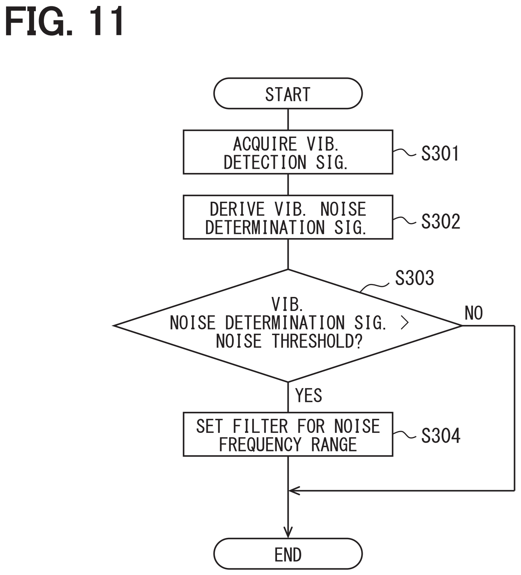

Next, the filter setting process executed by the control unit 2 will be described with reference to FIG. 11. The filter setting process is performed in cases where, as in the present embodiment, the first detection frequency range in which the vibration detection signal is output and the second detection frequency range in which the sound detection signal is output include a common frequency range. The filter setting process may be performed when the diagnostic sensor 1 is attached to the target, or when the drill 360 of the machine tool 310 is replaced, that is, when the drill 360, which is the determination target, is in a normal state. In addition, the filter setting process is performed while the machine tool 310 is in operation. However, the filter setting process may be performed not only while the machine tool 310 is operating, but also when the machine tool 310 is not operating.

The control unit 2 acquires a vibration detection signal in step S301, and in step S302, derives a vibration noise determination signal by performing FFT analysis or the like on the vibration detection signal. Then, the control unit 2 determines whether the vibration noise determination signal in the common frequency range is greater than a noise threshold value. In the present embodiment, the first detection frequency range is divided into multiple frequency ranges in advance, and the vibration noise determination signal and the noise threshold value are compared for each of the divided frequency ranges. The noise threshold value for each frequency range may be the same, or at least some of them may be different. Also, in the present embodiment, the noise threshold value corresponds to a noise determination threshold.

That is, when the diagnostic sensor 1 is attached to the mounting member 300, there may be frequencies at which the vibration detection signal becomes large even if the drill 360 is in a normal state, due to the surface state or other factors of the mounting member 300. Furthermore, when the vibration detection signal becomes large even when the drill 360 is in a normal state, the vibration may also affect the sound detection signal from the sound sensor 20. Thus, in the present embodiment, it is determined whether there is vibration that affects the sound sensor 20 within the common range.

Then, when the control unit 2 determines that the vibration noise determination signal is greater than the noise threshold value (i.e., Step S303: YES), in step S304, the control unit 2 identifies the frequency range that has exceeded the noise threshold value as the noise frequency range, sets a filter to attenuate the signals in the noise frequency range, and ends the process.

As a result, it is possible to derive a sound determination signal with reduced noise caused by vibration when deriving the sound determination signal in the above steps S104 and S204. Since the vibration noise determination signal is based on the vibration detection signal, the filter setting process can be regarded as a process using the vibration detection signal.

According to the embodiment described above, the diagnostic sensor 1 includes the vibration sensor 10 and the sound sensor 20. The sound sensor 20 detects the state in the high-frequency range of the drill, which is the determination target. Then, the sound sensor 20 outputs a sound detection signal corresponding to the sound propagating through the space. Thus, the influence of the surface of the mounting member 300 is less likely to affect the detection, and placement constraints can be reduced, compared to the case where the high-frequency state dependent on the drill 360 is detected using an AE sensor. In other words, according to the diagnostic sensor 1 of the present embodiment, it is possible to suppress a decrease in detection accuracy of the high-frequency state while reducing placement constraints.
(1) In the present embodiment, the magnets 540 are disposed on the outer first surface 51 of the housing 50. Thus, the diagnostic sensor 1 can be easily attached to the mounting member 300 by the magnets 540. In addition, on the outer first surface 51 of the housing 50, the sealing member 530 is disposed around the through-hole 510, which is compressed when attached to the mounting member 300 to seal the space between the housing 50 and the mounting member 300. Thus, sound from the mounting member 300 is more easily transmitted to the sound sensor 20 through the through-hole 510, making it possible to suppress a decrease in sensitivity.
(2) In the present embodiment, the magnets 540 are rotationally symmetric with respect to the sealing member 80. Thus, when the diagnostic sensor 1 is attached to the mounting member 300, it is possible to ensure that an even force is applied from the mounting member 300 to the sealing member 530.
(3) In the present embodiment, the housing 50 has a connector 55 on the side surface 53, and the connector 55 is disposed at a position of the side surface 53 between the outer first surface 51 and the central portion C2 between the outer first surface 51 and the outer second surface 52. Thus, the diagnostic sensor 1 is less likely to be detached from the mounting member 300 when the connector 55, which is connected to an external circuit, is pulled by the circuit, compared to the case where the connector 55 is disposed between the outer second surface 52 and the central portion C2 between the outer first surface 51 and the outer second surface 52.
(4) In the present embodiment, the second wiring board 40, on which the vibration sensor 10 is disposed, and the first wiring board 30, on which the sound sensor 20 is disposed, are stacked and arranged within the housing space 50a of the housing 50. Thus, it is possible to suppress the increase in size of the diagnostic sensor 1 in the planar direction of the housing 50. Accordingly, the mounting area on the mounting member 300 where the diagnostic sensor 1 is attached can be reduced.
(5) In the present embodiment, the fixing members 70 are arranged to overlap with the magnets 540 in the normal direction. Thus, vibration propagated from the mounting member 300 to the magnets 540 is more easily transmitted from the magnets 540 to the fixing members 70. Accordingly, the detection sensitivity of the vibration sensor 10 can be improved.
(6) In the present embodiment, a space surrounding the through-hole 510 in the housing 50 and the first wiring board 30 is sealed by the sealing member 80. Thus, it is possible to suppress sound leakage between the first wiring board 30 and the housing 50, and to prevent a decrease in the detection accuracy of the sound sensor 20.
(7) In the present embodiment, when it is known that the abnormal vibration frequency wave is included in the first detection frequency range, it is preferable that the position of the fixing member 70 is adjusted and fixed so that the resonance frequency of the second wiring board 40 matches the abnormal vibration frequency. As a result, the sensitivity can be increased and the vibration detection signal can be amplified.
(8) In the present embodiment, when it is known that the abnormal vibration frequency wave differs from the first detection frequency range, or when the abnormal vibration frequency is unknown, it is preferable that the position of the fixing member 70 is adjusted and fixed so that the resonance frequency of the second wiring board 40 falls outside the first detection frequency range. As a result, it is possible to suppress the resonance frequency of the second wiring board 40 from becoming noise in the vibration detection signal.
(9) In the present embodiment, when it is known that the abnormal sound frequency wave is included in the second detection frequency range, it is preferable that the volume of the acoustic space V3 is adjusted so that the resonance frequency matches the abnormal sound frequency. As a result, the sensitivity can be increased and the sound detection signal can be amplified. The volume of the acoustic space V3 can be easily changed by adjusting the position where the sealing member 530 is placed.
(10) In the present embodiment, when it is known that the abnormal sound frequency wave differs from the second detection frequency range, or when the abnormal sound vibration frequency is unknown, it is preferable that the volume of the acoustic space V3 is adjusted so that the resonance frequency falls outside the second detection frequency range. As a result, it is possible to suppress the resonance frequency of the acoustic space V3 from becoming noise in the sound detection signal.
(11) In the present embodiment, the control unit 2 determines the state of the drill 360, which is the determination target, using the vibration determination signal and the sound determination signal. Then, the sound determination signal is derived based on the sound detection signal output from the sound sensor 20 as described above. It is possible to prevent a decrease in determination accuracy since the decrease in detection accuracy in the high-frequency range is suppressed.
(12) In the present embodiment, the control unit 2 performs state determination by performing at least one of comparing the vibration determination signal with the vibration threshold, and comparing the sound determination signal with the sound threshold. Thus, it is possible to determine abnormalities in the drill 360 using a simple method.
(13) In the present embodiment, the control unit 2 performs self-diagnosis determination using the difference between the vibration determination signal and the sound determination signal. Thus, it is possible to avoid performing state determination when either the vibration sensor 10 or the sound sensor 20 is in an abnormal state.
(14) In the present embodiment, when the control unit 2 determines that the vibration noise determination signal is greater than the noise threshold, the control unit 2 sets a filter that attenuates signals in the frequency range exceeding the noise threshold. Then, when deriving the sound determination signal from the sound detection signal, the control unit 2 uses the filter to derive the sound determination signal. As a result, the vibration-related noise is less likely to be included in the sound determination signal, thereby preventing a decrease in determination accuracy.
(15) In the present embodiment, the resonance frequency of the acoustic space V3 can be adjusted by the placement location of the sealing member 530. When the sealing member 530 is arranged inside the magnets 540 when viewed in the normal direction, contact between external foreign objects attracted by the magnets 540 and the sealing member 530 can be reduced, compared to when the sealing member 530 is arranged outside the magnets 540. In other words, it is possible to prevent the sealing member 530 from being damaged by external foreign objects.

### (Modification of First Embodiment)

A modification of the above first embodiment will be explained. For example, in the above first embodiment, in step S103, it has been explained that the vibration threshold may be different for each frequency range or may be the same for all frequency ranges when comparing the vibration determination signal and the vibration threshold. However, since the vibration sensor 10 tends to have less stable detection accuracy at higher frequencies, the vibration threshold may be set higher as the frequency increases. Further, the control unit 2 may be configured to store, over multiple occasions, the frequencies of vibration determination signals that exceed the vibration threshold, and to perform self-learning to variably adjust the vibration threshold based on this stored information. That is, when the vibration thresholds are set differently, the threshold for each frequency range may be adjusted according to its reliability, such that the vibration threshold is set lower for frequency ranges with higher reliability. Similarly, the sound threshold may differ across frequency ranges, and when set differently, the sound threshold may be set lower for frequency ranges with higher reliability. Accordingly, this allows for further improvement in determination accuracy.

### (Second Embodiment)

The second embodiment will be described below. In this embodiment, the wiring board is consolidated into a single board compared to the first embodiment. Other aspects are the same as in the first embodiment, and thus a detailed description will be omitted here.

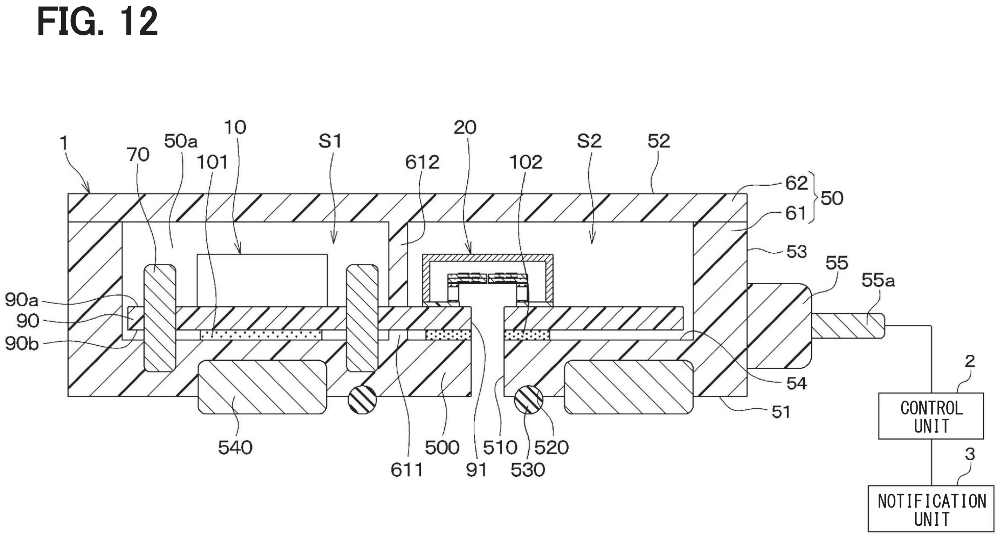

As shown in FIG. 12, the diagnostic sensor 1 of this embodiment is configured to have a single wiring board 90. The wiring board 90, like the first wiring board 30 and the second wiring board 40 described above, is constituted by a printed circuit board or the like. That is, the wiring board 90 has a first surface 90a and a second surface 90b, and the wiring on the first surface 90a (not shown) and the wiring on the second surface 90b are electrically connected as appropriate via through-hole wiring or the like.

On the first surface 90a of the wiring board 90, a vibration sensor 10 and a sound sensor 20 are disposed. In other words, in the present embodiment, the vibration sensor 10 and the sound sensor 20 are disposed on the common wiring board 90. The wiring board 90 defines a communication hole 91 which is fluidly connected to the communication hole 22a and the recess 210a of the sound sensor 20 to guide sound to the vibrating sections 222.

The wiring board 90 is fixed to the housing 50 by inserting the fixing members 70 around the vibration sensor 10 and fastening the fixing members 70 into the facing portion 500 while the second surface 90b of the wiring board 90 is positioned facing the facing portion 500. Further, the wiring board 90 is fixed to the housing 50 such that the communication hole 91 is fluidly connected to the through-hole 510. Furthermore, the wiring board 90 is arranged such that the vibration sensor 10 is positioned on the side of the sound sensor 20 opposite to the connector 55, and the magnet 540 is disposed to overlap with the vibration sensor 10 in the normal direction.

No fixing member 70 is inserted into the wiring board 90 at a position around the sound sensor 20. By fixing the wiring board 90 to the housing 50 in this manner, vibrations of the housing 50 are more easily transmitted to the vibration sensor 10 via the fixing members 70, and less easily transmitted to the sound sensor 20.

In addition, a transmission member 101 is disposed between the portion of the second surface 90b of the wiring board 90 that overlaps with the vibration sensor 10 and the inner first surface 54. A sealing member 102 is disposed between the periphery of the communication hole 31 on the second surface 90b of the wiring board 90 and the inner first surface 54. The transmission member 101 is preferably made of a material that facilitates the transmission of vibrations from the housing 50 to the vibration sensor 10 via the wiring board 90. For example, the transmission member 101 is preferably made of a material with a high modulus of elasticity, such as epoxy resin. The sealing member 102 serves to prevent sound guided from the through-hole 510 from leaking out between the second surface 90b of the wiring board 90 and the inner first surface 54, and has the same configuration as the sealing member 80 in the first embodiment described above. In other words, in the present embodiment, the transmission member 101 is made of a material having a higher modulus of elasticity than the sealing member 102.

In the present embodiment, each of the fixing members 70 and the transmission member 101 correspond to the fixing member. Further, in the present embodiment, the transmission member 101 is arranged to have a portion overlapping with the magnet 540 in the normal direction. In other words, in the present embodiment, the vibration sensor 10 and the transmission member 101 are arranged to face the magnet 540 in the normal direction.

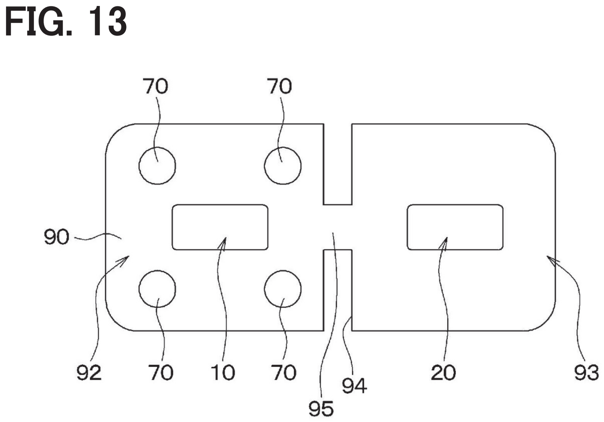

Furthermore, as shown in FIG. 13, in the present embodiment, the wiring board 90 defines the region where the vibration sensor 10 is disposed as a first arrangement region 92, and the region where the sound sensor 20 is disposed as a second arrangement region 93. The wiring board 90 defines slits 94 between the first arrangement region 92 and the second arrangement region 93. In other words, the first arrangement region 92 and the second arrangement region 93 are connected via a beam 95. The fixing members 70 of the present embodiment are disposed in the first arrangement region 92. Although FIG. 13 shows an example in which the slits 94 are defined from each of the two opposing sides of the wiring board 90 when viewed in the normal direction, a single slit 94 may be defined from only one of the two opposing sides. The slits 94 may be formed to be intermittently distributed between the two opposing sides of the wiring board 90.

Additionally, in the diagnostic sensor 1 of the present embodiment, as shown in FIG. 12, the housing space 50a of the housing 50 is substantially divided into a first space S1 where the vibration sensor 10 is disposed and a second space S2 where the sound sensor 20 is disposed. In the present embodiment, a protruding portion 611 is formed on the case 61, which comes into contact with the second surface 90b of the wiring board 90. Also, the lid 62 includes a protruding portion 612, which is in contact with the first surface 90a of the wiring board 90. In the present embodiment, the first space S1 and the second space S2 are substantially partitioned by the protruding portions 611 and 612.

According to the present embodiment described above, since the diagnostic sensor 1 includes the vibration sensor 10 and the sound sensor 20, the same effects as those of the first embodiment can be obtained.
(1) In the present embodiment, the vibration sensor 10 and the sound sensor 20 are arranged on the single wiring board 90, and the wiring board 90 is fixed to the housing 50. This reduces the number of parts and improves the ease of assembling the wiring board 90 to the housing 50.
(2) In the present embodiment, the vibration sensor 10 is arranged on the side of the sound sensor 20 opposite to the connector 55. As a result, when the connector 55, which is connected to an external circuit, is pulled or otherwise affected by the circuit, it is possible to suppress the transmission of vibrations to the vibration sensor 10.
(3) In the present embodiment, the slits 94 are defined in the wiring board 90 between the first arrangement region 92, where the vibration sensor 10 is disposed, and the second arrangement region 93, where the sound sensor 20 is disposed. As a result, it becomes more difficult for vibrations to be transmitted from the first arrangement region 92 to the second arrangement region 93, thereby suppressing the inclusion of vibrations as noise in the sound detection signal. In other words, the detection accuracy of the sound sensor 20 can be improved.
(4) In the present embodiment, the housing space 50a is partitioned into the first space S1 and the second space S2. As a result, it is possible to suppress the vibrations in the first space S1 from affecting the second space S2, as well as to suppress the sounds in the second space S2 from affecting the first space S1. Thus, the detection accuracy of both the vibration sensor 10 and the sound sensor 20 can be improved.

It should be noted that, in the present embodiment, an example has been described in which the protruding portions 611 and 612 are provided on the housing 50 to partition the first space S1 and the second space S2. However, the first space S1 and the second space S2 may be partitioned by arranging shielding plates or the like on the first surface 90a and the second surface 90b of the wiring board 90, respectively.

### (Third Embodiment)

The third embodiment will be described. In the present embodiment, another magnet has been added to the second embodiment. Other aspects are the same as in the second embodiment, and therefore, a description thereof will be omitted here.

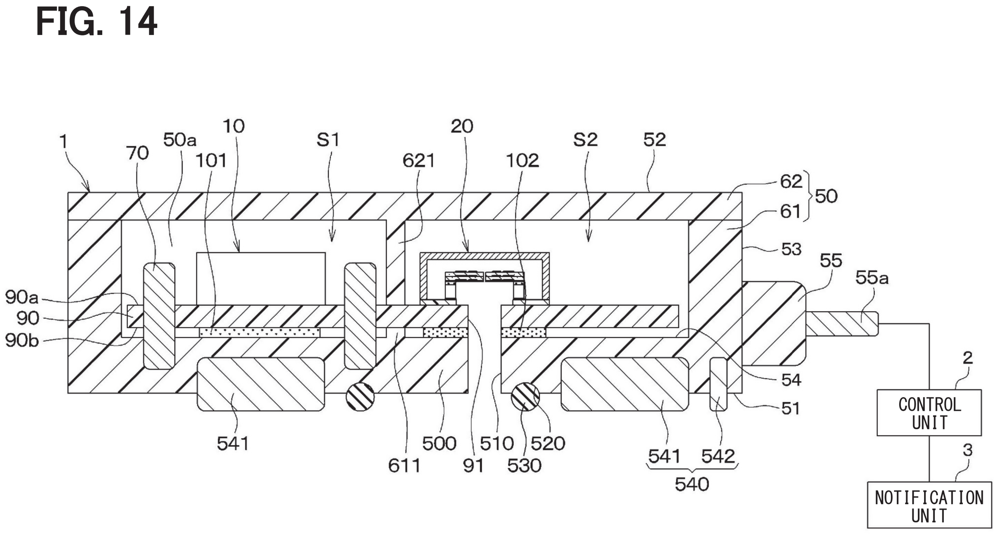

As shown in FIG. 14, the diagnostic sensor 1 of the present embodiment includes a magnet 540 having a first magnet 541 and a second magnet 542. The first magnet 541 is rotationally symmetric with respect to the sealing member 530. The second magnet 542 is disposed between the connector 55 and the first magnet 541. Thus, according to the magnet 540 of the present disclosure, in a predetermined range where the first magnet 541 is disposed, the first magnet 541 is rotationally symmetric with respect to the sealing member 530.

According to the present embodiment described above, since the diagnostic sensor 1 includes the vibration sensor 10 and the sound sensor 20, the same effects as those of the first embodiment can be obtained.
(1) In the present embodiment, the magnet 540 includes the first magnet 541 and the second magnet 542, and the second magnet 542 is disposed between the connector 55 and the first magnets 541. The connector 55 is a portion that is connected to an external circuit, and is a portion where vibration is likely to be applied when the connector 55 is pulled by the circuit. Thus, by arranging the second magnet 542 close to the connector 55 as in the present embodiment, detachment of the diagnostic sensor 1 from the mounting member 300 can be suppressed.

### (Fourth Embodiment)

The fourth embodiment will be described. The present embodiment differs from the second embodiment in that an absorption film has been added. Other aspects are the same as in the second embodiment, and therefore, a description thereof will be omitted here.

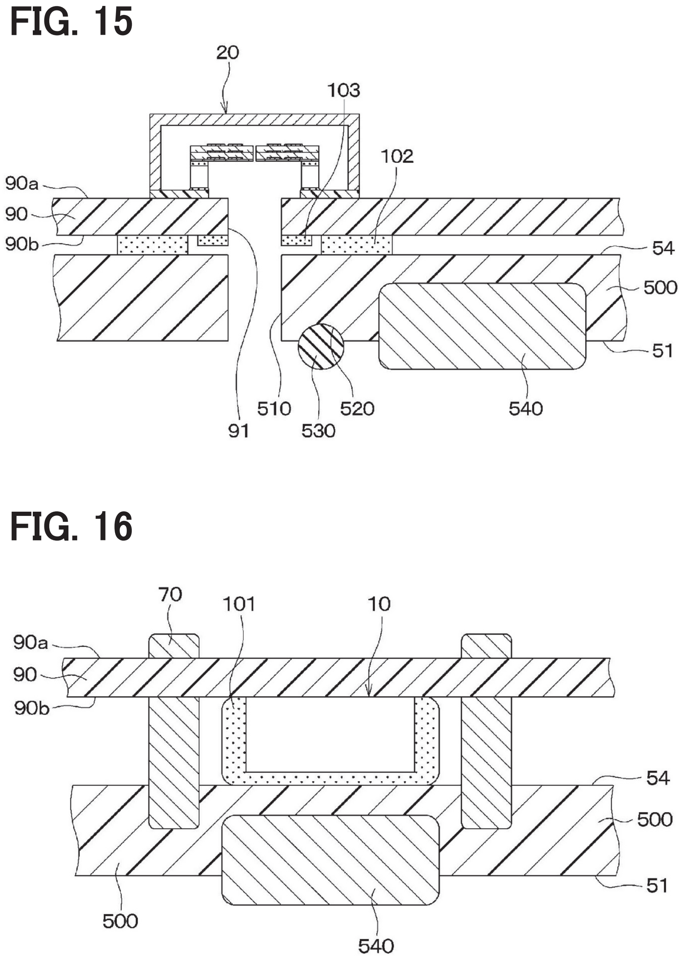

As shown in FIG. 15, in the diagnostic sensor 1 of the present embodiment, a sealing member 102 is disposed between the periphery of the communication hole 91 on the second surface 90b of the wiring board 90 and the inner first surface 54. In the present embodiment, an absorption film 103 is disposed on the second surface 90b of the wiring board 90 at a position between the sealing member 102 and the communication hole 91. That is, when viewed in the normal direction, the absorption film 103 is disposed between the communication hole 91 and the sealing member 102.

The absorption film 103 serves to absorb foreign matter that may enter through the through-hole 510 of the housing 50, thereby preventing such foreign matter from reaching the sound sensor 20. The absorption film 103 may be composed of a porous membrane. When the intended application of the diagnostic sensor 1 is predetermined and water may enter as a foreign substance, the absorption film 103 may be composed of a hydrophilic membrane. Similarly, when oil may enter as a foreign substance, the absorption film 103 may be composed of a lipophilic membrane. Such an absorption film 103 is particularly effective when the sound detection element 200 is of the electrostatic type. In addition, since the absorption film 103 of the present embodiment is a porous membrane, it may be arranged to block the through-hole 510 or the communication hole 91. In this case, sound is applied to the sound sensor 20 through the pores of the porous membrane. Furthermore, when the absorption film 103 is arranged to block the through-hole 510 or the communication hole 91, it is possible to further suppress the intrusion of foreign substances into the sound sensor 20.

According to the present embodiment described above, since the diagnostic sensor 1 includes the vibration sensor 10 and the sound sensor 20, the same effects as those of the first embodiment can be obtained.
(1) In the present embodiment, the absorption film 103 is disposed on the second surface 90b of the wiring board 90 at a position between the sealing member 102 and the communication hole 91. Thus, it is possible to absorb foreign substances that may enter through the through-hole 510 of the housing 50 and thereby suppress the foreign substances from reaching the sound sensor 20, which in turn helps prevent a decrease in the detection accuracy of the sound sensor 20.

### (Fifth Embodiment)

The fifth embodiment will be described. In this embodiment, the method of arranging the transmission member 101 has been changed from that of the second embodiment. Other aspects are the same as in the second embodiment, and therefore, a description thereof will be omitted here.

As shown in FIG. 16, in the diagnostic sensor 1 of this embodiment, the vibration sensor 10 is arranged on the second surface 90b of the wiring board 90. The transmission member 101 is arranged between the vibration sensor 10 and the inner first surface 54 of the housing 50, and is also disposed to cover the periphery, such as the side surfaces, of the vibration sensor 10. In other words, the vibration sensor 10 is covered by the transmission member 101 at portions other than the portion facing the wiring board 90.

According to the present embodiment described above, since the diagnostic sensor 1 includes the vibration sensor 10 and the sound sensor 20, the same effects as those of the first embodiment can be obtained.
(1) In the present embodiment, the vibration sensor 10 is covered by the transmission member 101 at portions other than the portion facing the wiring board 90. Thus, vibrations of the housing 50 are more easily transmitted to the vibration sensor 10 via the transmission member 101, enabling an improvement in the sensitivity of the vibration sensor 10.

### (Modified Example of Fifth Embodiment)

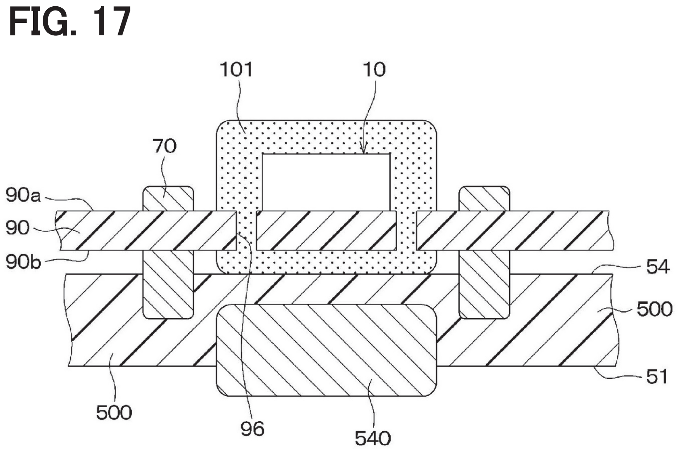

A modified example of the fifth embodiment described above will be explained. In the above fifth embodiment, as shown in FIG. 17, the vibration sensor 10 may be covered with the transmission member 101. That is, in the diagnostic sensor 1, the wiring board 90 defines through-holes 96 around the vibration sensor 10. Then, the transmission member 101 is arranged to cover the vibration sensor 10 through the through-holes 96.

### (Sixth Embodiment)

The sixth embodiment will be described. This embodiment differs from the first embodiment in that the configuration of the mounting member has been modified. Other aspects are the same as in the first embodiment, and thus a detailed description will be omitted here.

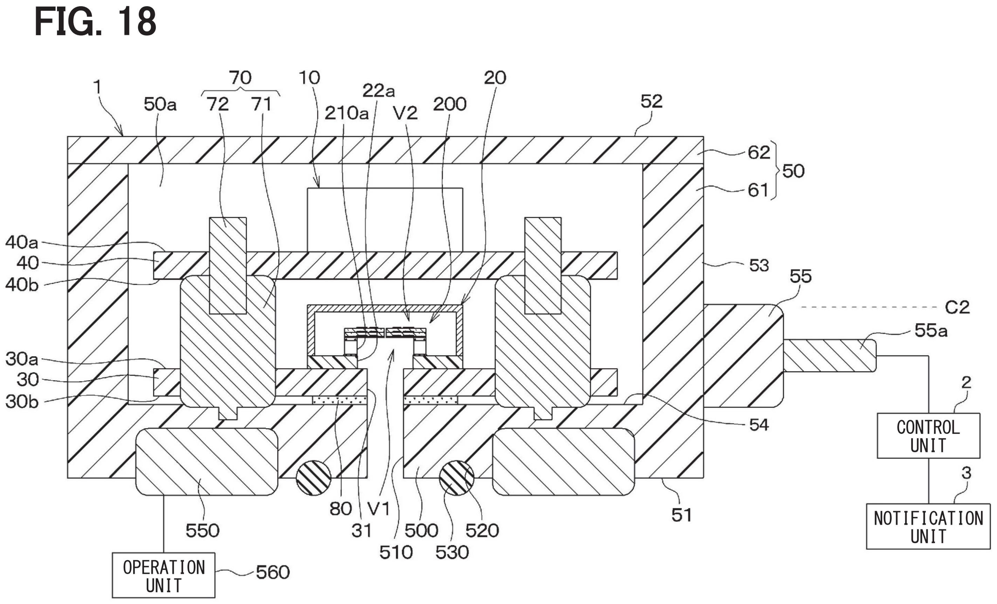

As shown in FIG. 18, in this embodiment, the diagnostic sensor 1 includes a magnet base 550, which can vary its holding force, as the attachment member on the outer first surface 51, instead of the magnets 540 used in the first embodiment. The magnet base 550 includes a yoke and a permanent magnet, although its detailed structure is omitted. The magnet base 550 varies its holding force (i.e., adsorption force) as the permanent magnet rotates or displaces, thereby changing the magnetic flux flowing through the yoke. Additionally, the magnet base 550 is provided with an operation unit 560 that rotates or displaces the permanent magnet.

The permanent magnet may be made of neodymium, ferrite, or cobalt, and the yoke may be made of materials such as stainless steel. The permanent magnet may be composed of a disc-shaped magnet or a rod-shaped magnet. The permanent magnet is constructed by laminating multiple disc-shaped magnets. In cases where the permanent magnet is constructed by laminating the multiple disc-shaped magnets, the permanent magnet is configured by stacking the multiple disc-shaped magnets such that the stacked portions form different magnetic poles. The operation unit 560 may be integrally provided with the magnet base 550 or may be formed separately from the magnet base 550 as long as the operation unit 560 can rotate or displace the permanent magnet.

In the present embodiment described above, the diagnostic sensor 1 includes the vibration sensor 10 and the sound sensor 20, and thus, the same effects as those of the first embodiment can be obtained.
(1) In the present embodiment, the diagnostic sensor 1 includes, as the attachment member, the magnet base 550 whose holding force can be varied. Therefore, it is possible to facilitate the attachment and detachment of the diagnostic sensor 1 to and from the mounting member 300, while increasing the holding force of the diagnostic sensor 1 when the diagnostic sensor 1 is attached to the mounting member 300. Although not particularly limited, it is preferable that the holding force of the magnet base 550 is adjusted to 50 N or less when attaching or detaching the diagnostic sensor 1 to or from the mounting member 300, so that a person can easily perform the attachment or detachment. Furthermore, it is preferable that, after the diagnostic sensor 1 is attached to the mounting member 300, the holding force of the magnet base 550 is adjusted to 50 N or more to suppress positional displacement and the like.

By adjusting the holding force of the magnet base 550 in this manner, it becomes easier to compress the sealing member 530 when the diagnostic sensor 1 is attached to the mounting member 300. Accordingly, it is possible to sufficiently suppress the entry of foreign matter in the vicinity of the through-hole 510 of the housing 50. For example, when the compression of the sealing member 530 is insufficient, foreign substances such as oil films may reach the vicinity of the through-hole 510 in the housing 50. In this case, according to the investigations by the present inventors, it was confirmed that the detection accuracy of signals, particularly in the high-frequency range, decreases. Thus, by adjusting the holding force of the magnet base 550 to sufficiently compress the sealing member 530, it is possible to suppress a decrease in the detection accuracy of signals in the high-frequency range.

Furthermore, by adjusting the holding force of the magnet base 550 as described above, the diagnostic sensor 1 can be easily removed from the mounting member 300. That is, when foreign substances such as metal shavings adhere to the housing 50, the manner of vibration may change. Furthermore, when the state in which foreign substances such as metal shavings adhere to the housing 50 is left unaddressed, safety may be reduced. Thus, by making it easy to remove the diagnostic sensor 1 from the mounting member 300, foreign substances such as metal shavings can be easily removed, thereby improving safety while suppressing a decrease in vibration detection accuracy caused by changes in vibration.

### (Other Embodiments)

The present disclosure has been described in accordance with the embodiments. However, it is understood that the present disclosure is not limited to these embodiments or structures. The present disclosure also encompasses various modifications and equivalents within the scope of the invention. In addition, various combinations and forms-including those comprising only one element, more than one, or fewer than one element-are also within the scope and spirit of the present disclosure.

For example, in each of the above embodiments, cases in which the vibration sensor 10 and the sound sensor 20 are packaged have been described. However, the vibration sensor 10 and the sound sensor 20 may not necessarily be packaged. Furthermore, when the vibration sensor 10 and the sound sensor 20 are packaged, they may have a QFP (Quad Flat Package) structure with lead terminals.

In the above embodiments, examples have been described in which the fixing members 70 are screws. However, the fixing members 70 may be composed of a pin, a joint, or a combination of a screw, a pin, and a joint.

In the above embodiments, the magnet 540 is described as the attachment member. However, the attachment member may be a screw or as a structure for snap-fit connection as long as the attachment member can secure the diagnostic sensor 1 to the mounting member 300. In cases where the attachment member is configured as a screw or for snap-fit connection, an appropriate structure for mounting such attachment members is formed on the mounting member 300 as necessary.

In the above embodiments, the magnet 540 as the attachment member and the sealing member 530 may also be attached to the mounting member 300.

In the above embodiments, examples have been described in which a portion of the first detection frequency range and the second detection frequency range overlap. However, the first detection frequency range and the second detection frequency range do not necessarily have to have any common frequencies.

In the above embodiments, examples have been described in which the magnet 540 has a portion rotationally symmetric with respect to the sealing member 530. However, the magnet 540 does not necessarily have to be rotationally symmetric with respect to the sealing member 530.

In the above embodiments, the connector 55 may be arranged between the outer second surface 52 and the central portion C2.

In the first embodiment above, the fixing members 70 do not necessarily have to be positioned to overlap with the magnets 540 in the normal direction. In the second to fifth embodiments above, the transmission member 101 does not necessarily have to be positioned to overlap with the magnets 540 in the normal direction.

In the second embodiment above, the vibration sensor 10 may be disposed between the connector 55 and the sound sensor 20.

In the second embodiment above, the wiring board 90 does not necessarily have to be provided with the slit 94.

In the second embodiment above, the housing space 50a does not necessarily have to be partitioned into the first space S1 and the second space S2.

In the first embodiment above, the sealing member 80 does not necessarily have to be provided. Similarly, in the second to fifth embodiments above, the sealing member 102 does not necessarily have to be provided.

Furthermore, in each of the embodiments described above, examples have been explained in which the control unit 2 is disposed outside the diagnostic sensor 1 and connected to the connector 55. However, for example, in the first embodiment described above, the control unit 2 may be incorporated into the first wiring board 30 or the second wiring board 40. Similarly, in the second to fifth embodiments described above, the control unit 2 may be incorporated into the wiring board 90.

Furthermore, in each of the embodiments described above, examples have been explained in which abnormality determination is performed by comparing the vibration determination signal with the vibration threshold serving as a vibration determination element. However, the vibration determination element is not limited to the vibration threshold. The vibration determination element may be the amount of change over a certain period of time, or a waveform relating to the time and signal until one or more processing operations are completed. In other words, as long as abnormality can be determined, the detailed configuration of the vibration determination element is not particularly limited. Then, a vibration determination signal that can be compared with the vibration determination element is appropriately derived.

Similarly, the sound determination signal and the sound determination element used in the abnormality determination are also not particularly limited and can be appropriately modified. In addition, in the self-diagnosis determination as well, each determination signal and diagnostic determination element are not particularly limited and can be appropriately modified.

Furthermore, the above embodiments can also be appropriately combined as needed. For example, the above third embodiment may be combined with the above first embodiment, and the magnet 540 may have the first magnet 541 and the second magnet 542. The above fourth embodiment may be combined with the above first embodiment, and the diagnostic sensor 1 of the first embodiment may include the absorption film 103. In addition, the configuration of the second embodiment in which the housing space 50a is partitioned into the first space S1 and the second space S2 may also be combined with the above first embodiment. In this case, in the above first embodiment, the first space S1 where the vibration sensor 10 is positioned can be partitioned from the second space S2 where the sound sensor 20 is positioned by enlarging the second wiring board 40 in the planar direction and bringing the outer edge of the second wiring board 40 into contact with the housing 50. Furthermore, the above sixth embodiment may be combined with each of the embodiments, to include the magnet base 550 as the attachment member. In addition, it is also possible to further combine configurations in which the above embodiments are combined with each other.

The control unit and its methods described in the present disclosure may also be implemented by a dedicated computer provided by configuring a processor and memory programmed to execute one or more functions embodied by a computer program. Alternatively, the control unit and its methods described in the present disclosure may also be implemented by a dedicated computer provided by configuring the processor using one or more dedicated hardware logic circuits. Alternatively, the control unit and its methods described in the present disclosure may also be implemented by one or more dedicated computers configured by a combination of a processor and memory programmed to execute one or more functions and a processor configured with one or more hardware logic circuits. Furthermore, the computer program may be stored on a computer-readable non-transitory tangible recording medium as instructions executed by a computer.

### [Disclosure of the Invention]

The above disclosure can be understood, for example, from the following perspectives.

### [First Aspect]

A diagnostic sensor is to be mounted on a mounting member (300). The diagnostic sensor includes a vibration sensor (10), a sound sensor (20), and a housing (50). The vibration sensor is configured to output a vibration detection signal in response to vibration within a first detection frequency range. The sound sensor is configured to output a sound detection signal in response to sound in a space within a second detection frequency range. The second detection frequency range includes frequency higher than the first detection frequency range. The housing defines a housing space (50a) in which the vibration sensor and the sound sensor are housed, and has a facing surface (51) that faces the mounting member when the diagnostic sensor is mounted on the mounting member. The facing surface defines a through hole (510) through which the sound is guided into the housing.

### [Second Aspect]

The diagnostic sensor according to the first aspect, further includes an attachment member (540, 550) disposed on the facing surface of the housing and configured to fix the housing to the mounting member, and a sealing member (530) disposed on the facing surface around the through hole and configured to be compressed to seal a space between the housing and the mounting member when the diagnostic sensor is mounted on the mounting member.

### [Third Aspect]

In the diagnostic sensor according to the second aspect, the attachment member includes a portion that is rotationally symmetric with respect to the sealing member on the facing surface of the housing.

### [Fourth Aspect]

In the diagnostic sensor according to the third aspect, the housing includes a connector (55). The attachment member includes a first attachment member (541) that is rotationally symmetric with respect to the sealing member, and a second attachment member (542) that is arranged between the connector and the first attachment member.

### [Fifth Aspect]

In the diagnostic sensor according to any one of the first to fourth aspects, the housing includes an opposite surface (52) opposite to the facing surface and a side surface (53) connecting the facing surface and the opposite surface. The housing includes a connector (55) on the side surface, and the connector is disposed between the facing surface and a central portion (C2) of the side surface between the facing surface and the opposite surface.

### [Sixth Aspect]

The diagnostic sensor according to any one of the first to fifth aspects further includes a first wiring board (30) on which the sound sensor is disposed, and a second wiring board (40) on which the vibration sensor is disposed. The first wiring board and the second wiring board are stacked while the first wiring board is disposed between the second wiring board and the facing surface. The sound sensor includes a detection unit (222) configured to output the sound detection signal. The first wiring board and the second wiring board are fixed to the housing by a fixing member (70) such that the sound guided into the space via the through hole and propagating through the space is applied to the detection unit.

### [Seventh Aspect]

The diagnostic sensor according to any one of the first to fifth aspects, further includes a wiring board (90) on which the vibration sensor and the sound sensor are disposed. The wiring board is housed in a housing space of the housing. The wiring board has a first arrangement region in which the vibration sensor is arranged and a second arrangement region in which the sound sensor is arranged. The sound sensor includes a detection unit (222) configured to output the sound detection signal. The first arrangement region is fixed to the housing by a fixing member (70, 101) such that the sound guided into the space via the through hole and propagating through the space is applied to the detection unit.

### [Eighth Aspect]

In the diagnostic sensor according to the seventh aspect, the housing includes a connector (55), and the sound sensor is disposed between the vibration sensor and the connector.

### [Ninth Aspect]

In the diagnostic sensor according to the seventh or the eighth aspect, the wiring board defines a slit (94) between the first arrangement region and the second arrangement region.

### [Tenth Aspect]

In the diagnostic sensor according to any one of the sixth to nineth aspects, the housing includes, on the facing surface, an attachment member (540, 550) configured to fix the housing to the mounting member, and the fixing member is disposed to face the attachment member in a direction normal to the facing surface of the housing.

### [Eleventh Aspect]

In the diagnostic sensor according to any one of the first to tenth aspect, the housing space is partitioned into a first space (S1) in which the vibration sensor is disposed and a second space (S2) in which the sound sensor is disposed.

### [Twelfth Aspect]

In the diagnostic sensor according to any one of the first to eleventh aspects, a sealing member (80, 102) is disposed between the wiring board on which the sound sensor is disposed and a portion of the housing around the through hole.

### [Thirteenth Aspect]

In the diagnostic sensor according to the twelfth aspect, an absorption film (103) is disposed between the wiring board on which the sound sensor is disposed and the portion of the housing around the through hole. The absorption film is disposed between the sealing member and the through hole when viewed in a direction normal to the facing surface.

### [Fourteenth Aspect]

In the diagnostic sensor according to any one of sixth to nineth aspects, the wiring board on which the vibration sensor is disposed is fixed to the housing in a state where a resonance frequency of the wiring board matches a desired frequency of vibration when the desired frequency falls within the first detection frequency range. The desired frequency is a frequency of vibration due to the mounting member on which the diagnostic sensor is mounted.

### [Fifteenth Aspect]

In the diagnostic sensor according to any one of the sixth to nineth aspects, the wiring board on which the vibration sensor is disposed is fixed to the housing in a state where a resonance frequency of the wiring board falls outside the first detection frequency range when a desired frequency of vibration falls outside the first detection frequency range or when it is unknown whether the desired frequency falls within the first detection frequency range. The desired frequency is a frequency of vibration due to the mounting member on which the diagnostic sensor is mounted.

### [Sixteenth Aspect]

In the diagnostic sensor according to any one of the sixth to nineth aspects, a closed space defined when the diagnostic sensor is mounted on the mounting member is defined as an acoustic space (V3). The closed space is a space through which sound from the mounting member propagates. A volume of the acoustic space is adjusted such that a resonance frequency of the acoustic space matches a desired frequency of sound when the desired frequency falls within the second detection frequency range. The desired frequency is a frequency of sound due to the mounting member on which the diagnostic sensor is mounted.

### [Seventeenth Aspect]

In the diagnostic sensor according to any one of the sixth to nineth aspects, a closed space defined when the diagnostic sensor is mounted on the mounting member is defined as an acoustic space (V3). The closed space is a space through which sound from the mounting member propagates. A volume of the acoustic space is adjusted such that a resonance frequency of the acoustic space falls outside a desired frequency of sound when the desired frequency falls outside the second detection frequency range, or when it is unknown whether the desired frequency falls within the second detection frequency range. The desired frequency is a frequency of sound due to the mounting member on which the diagnostic sensor is mounted.

### [Eighteenth Aspect]

In the diagnostic sensor according to the seventh aspect, the fixing member includes a transmission member (101), and the transmission member covers a portion of the vibration sensor that does not face the wiring board.

### [Nineteenth Aspect]

In the diagnostic sensor according to the first to eighteenth aspects, the housing includes, on the facing surface, an attachment member (550) configured to fix the housing to the mounting member, and the attachment member includes a magnetic base configured to vary a holding force.

### [Twentieth Aspect]

A state determining system includes the diagnostic sensor according to any one of the first to nineteenth aspects, and a control unit (2) configured to perform a predetermined process. The diagnostic sensor is disposed on the mounting member (300) having a determination target (300). The control unit is configured to perform a state determination process of determining a state of the determination target based on a vibration determination signal from the vibration detection signal and a sound determination signal from the sound detection signal.

### [Twenty-First Aspect]

In the state determining system according to the twentieth aspect, the control unit is configured to perform the state determination by performing at least one of comparing the vibration determination signal with a vibration determination element and comparing the sound determination signal with a sound determination element.

### [Twenty-Second Aspect]

In the state determining system according to the twentieth or twenty-first aspect, the first detection frequency range and the second detection frequency range include a common frequency range. The control unit is configured to perform a self-diagnosis process of determining whether at least one of the vibration sensor and the sound sensor has a malfunction by comparing a difference determination signal with a diagnosis determination element in the common frequency range. The difference determination signal is a signal based on a difference between the vibration detection signal and the sound detection signal.

### [Twenty-Third Aspect]

In the state determining system according to any one of the twentieth to twenty-second aspects, the first detection frequency range and the second detection frequency range include a common frequency range. The control unit is configured to perform a filter setting process upon determining that the vibration detection signal within the common frequency range is greater than a noise determination threshold. The filter setting process is a process of setting a filter to attenuate a sound detection signal in a frequency range in which the vibration detection signal is greater than the noise determination threshold. The control unit derives the sound determination signal with the filter.

### [Twenty-Fourth Aspect]

In the state determining system according to any one of the twentieth to twenty-third aspects, the control unit is configured to divide a detection frequency range in which the detection signal is output into multiple frequency sections during performing the state determination, compare the detection signal in each of the divided frequency sections with a determination element, and change the determination element for each of the divided frequency sections depending on a reliability.

## Claims

1. A diagnostic sensor to be mounted on a mounting member (300), the diagnostic sensor comprising:
a vibration sensor (10) configured to output a vibration detection signal in response to vibration within a first detection frequency range; and
a sound sensor (20) configured to output a sound detection signal in response to sound in a space within a second detection frequency range, the second detection frequency range including frequency higher than the first detection frequency range; and
a housing (50) defining a housing space (50a) in which the vibration sensor and the sound sensor are housed, and having a facing surface (51) that faces the mounting member when the diagnostic sensor is mounted on the mounting member, the facing surface defining a through hole (510) through which the sound is guided into the housing.

2. The diagnostic sensor according to claim 1, further comprising:
an attachment member (540, 550) disposed on the facing surface of the housing and configured to fix the housing to the mounting member; and
a sealing member (530) disposed on the facing surface around the through hole and configured to be compressed to seal a space between the housing and the mounting member when the diagnostic sensor is mounted on the mounting member.

3. The diagnostic sensor according to claim 2, wherein
the attachment member includes a portion that is rotationally symmetric with respect to the sealing member on the facing surface of the housing.

4. The diagnostic sensor according to claim 3, wherein
the housing includes a connector (55), and
the attachment member includes:
a first attachment member (541) that is rotationally symmetric with respect to the sealing member; and
a second attachment member (542) that is arranged between the connector and the first attachment member.

5. The diagnostic sensor according to claim 1, wherein
the housing includes an opposite surface (52) opposite to the facing surface and a side surface (53) connecting the facing surface and the opposite surface,
the housing includes a connector (55) on the side surface, and
the connector is disposed between the facing surface and a central portion (C2) of the side surface between the facing surface and the opposite surface.

6. The diagnostic sensor according to claim 1, further comprising
a first wiring board (30) on which the sound sensor is disposed; and
a second wiring board (40) on which the vibration sensor is disposed, wherein
the first wiring board and the second wiring board are stacked while the first wiring board is disposed between the second wiring board and the facing surface,
the sound sensor includes a detection unit (222) configured to output the sound detection signal, and
the first wiring board and the second wiring board are fixed to the housing by a fixing member (70) such that the sound guided into the space via the through hole and propagating through the space is applied to the detection unit.

7. The diagnostic sensor according to claim 1, further comprising
a wiring board (90) on which the vibration sensor and the sound sensor are disposed, the wiring board being housed in a housing space of the housing,
the wiring board has a first arrangement region in which the vibration sensor is arranged and a second arrangement region in which the sound sensor is arranged,
the sound sensor includes a detection unit (222) configured to output the sound detection signal, and
the first arrangement region is fixed to the housing by a fixing member (70, 101) such that the sound guided into the space via the through hole and propagating through the space is applied to the detection unit.

8. The diagnostic sensor according to claim 7, wherein
the housing includes a connector (55), and
the sound sensor is disposed between the vibration sensor and the connector.

9. The diagnostic sensor according to claim 7, wherein
the wiring board defines a slit (94) between the first arrangement region and the second arrangement region.

10. The diagnostic sensor according to any one of claims 6 to 9, wherein
the housing includes, on the facing surface, an attachment member (540, 550) configured to fix the housing to the mounting member, and
the fixing member is disposed to face the attachment member in a direction normal to the facing surface of the housing.

11. The diagnostic sensor according to any one of claims 6 to 9, wherein
the housing space is partitioned into a first space (S1) in which the vibration sensor is disposed and a second space (S2) in which the sound sensor is disposed.

12. The diagnostic sensor according to any one of claims 6 to 9, wherein
a sealing member (80, 102) is disposed between the wiring board on which the sound sensor is disposed and a portion of the housing around the through hole.

13. The diagnostic sensor according to claim 12, wherein
an absorption film (103) is disposed between the wiring board on which the sound sensor is disposed and the portion of the housing around the through hole, and
the absorption film is disposed between the sealing member and the through hole when viewed in a direction normal to the facing surface.

14. The diagnostic sensor according to any one of claims 6 to 9, wherein
the wiring board on which the vibration sensor is disposed is fixed to the housing in a state where a resonance frequency of the wiring board matches a desired frequency of vibration when the desired frequency falls within the first detection frequency range, the desired frequency being a frequency of vibration due to the mounting member on which the diagnostic sensor is mounted.

15. The diagnostic sensor according to any one of claims 6 to 9, wherein
the wiring board on which the vibration sensor is disposed is fixed to the housing in a state where a resonance frequency of the wiring board falls outside the first detection frequency range when a desired frequency of vibration falls outside the first detection frequency range or when it is unknown whether the desired frequency falls within the first detection frequency range, the desired frequency being a frequency of vibration due to the mounting member on which the diagnostic sensor is mounted.

16. The diagnostic sensor according to any one of claims 6 to 9, wherein
a closed space defined when the diagnostic sensor is mounted on the mounting member is defined as an acoustic space (V3), the closed space being a space through which sound from the mounting member propagates, and
a volume of the acoustic space is adjusted such that a resonance frequency of the acoustic space matches a desired frequency of sound when the desired frequency falls within the second detection frequency range, the desired frequency being a frequency of sound due to the mounting member on which the diagnostic sensor is mounted.

17. The diagnostic sensor according to any one of claims 6 to 9, wherein
a closed space defined when the diagnostic sensor is mounted on the mounting member is defined as an acoustic space (V3), the closed space being a space through which sound from the mounting member propagates, and
a volume of the acoustic space is adjusted such that a resonance frequency of the acoustic space falls outside a desired frequency of sound when the desired frequency falls outside the second detection frequency range, or when it is unknown whether the desired frequency falls within the second detection frequency range, the desired frequency being a frequency of sound due to the mounting member on which the diagnostic sensor is mounted.

18. The diagnostic sensor according to claim 7, wherein
the fixing member includes a transmission member (101), and
the transmission member covers a portion of the vibration sensor that does not face the wiring board.

19. The diagnostic sensor according to claim 1, wherein
the housing includes, on the facing surface, an attachment member (550) configured to fix the housing to the mounting member, and
the attachment member includes a magnetic base configured to vary a holding force.

20. A state determining system comprising:
the diagnostic sensor according to claim 1; and
a control unit (2) configured to perform a predetermined process, wherein
the diagnostic sensor is disposed on the mounting member (300) having a determination target (300), and
the control unit is configured to perform a state determination process of determining a state of the determination target based on a vibration determination signal from the vibration detection signal and a sound determination signal from the sound detection signal.

21. The state determining system according to claim 20, wherein
the control unit is configured to perform the state determination by performing at least one of comparing the vibration determination signal with a vibration determination element and comparing the sound determination signal with a sound determination element.

22. The state determining system according to claim 20, wherein
the first detection frequency range and the second detection frequency range include a common frequency range, and
the control unit is configured to perform a self-diagnosis process of determining whether at least one of the vibration sensor and the sound sensor has a malfunction by comparing a difference determination signal with a diagnosis determination element in the common frequency range, the difference determination signal being a signal based on a difference between the vibration detection signal and the sound detection signal.

23. The state determining system according to claim 20, wherein
the first detection frequency range and the second detection frequency range include a common frequency range, and
the control unit is configured to:
perform a filter setting process upon determining that the vibration detection signal within the common frequency range is greater than a noise determination threshold, the filter setting process being a process of setting a filter to attenuate a sound detection signal in a frequency range in which the vibration detection signal is greater than the noise determination threshold; and
derive the sound determination signal with the filter.

24. The state determining system according to claim 20, wherein
the control unit is configured to:
divide a detection frequency range in which the detection signal is output into multiple frequency sections during performing the state determination;
compare the detection signal in each of the divided frequency sections with a determination element; and
change the determination element for each of the divided frequency sections depending on a reliability.
